# EUROPEAN PATENT SPECIFICATION

(11) **EP 3 382 298 B1**
(45) Date of publication and mention of the grant of the patent: **09.09.2020**
(21) Application number: 15909297.2
(22) Date of filing: 27.11.2015
(51) Int. Cl.: F24H 1/18, H02J 3/00, F24H 9/20, H02J 3/14, H02J 3/38

(54) **WATER HEATER CONTROL SYSTEM**
STEUERUNGSSYSTEM FÜR WASSERERHITZER
SYSTÈME DE COMMANDE DE CHAUFFE-EAU

(43) Date of publication of application: 03.10.2018
(73) Proprietor: Mitsubishi Electric Corporation, Chiyoda-ku Tokyo 100-8310 (JP)
(72) Inventor: KOMATSU, Masayuki, Tokyo 100-8310 (JP); YANAGIMOTO, Kei, Tokyo 100-8310 (JP); OGAWA, Yuki, Tokyo 100-8310 (JP); TAKAYAMA, Keisuke, Tokyo 100-8310 (JP); OGAWA, Takashi, Tokyo 100-8310 (JP); BARADA, Naoki, Tokyo 100-8310 (JP); NOMURA, Satoshi, Tokyo 100-8310 (JP); INABA, Tadahiko, Tokyo 100-8310 (JP)
(74) Representative: Studio Torta S.p.A.
(86) International application number: PCT/JP2015/083394
(87) International publication number: WO 2017/090180

(56) References cited:
- EP-A1- 2 773 008
- EP-A1- 2 886 971
- GB-A- 2 514 128
- JP-A- 2013 110 951
- JP-A- 2014 095 501
- JP-A- 2015 056 977

## Description

### Technical Field

The present disclosure relates to a water heater control system for control of a storage-type electric water heater capable of water heating using purchased power and photovoltaic power. Such water heater control systems are disclosed in Patent Literature 1 and in Patent Literature 2.

### Background Art

The spread of power generation by natural energy makes electrical distribution grid stability difficult to assure, and thus operation of photovoltaic electrical generation is starting to be controlled by instructions from electric power providers. Further, the unit price for the purchase of photovoltaic electricity is assumed to decrease with the spread of photovoltaic electrical generation. Due to this decrease, captive consumption is becoming economically advantageous versus sale of excess domestic photovoltaic electricity, and this trend will strengthen in the future.

The method currently considered to be most logical for domestic consumption causes running of water heating equipment using electricity for water heating in a time slot at night when electric power rates are inexpensive, instead of running in a daytime time slot when excess photovoltaic power is generated. For example, for an electric water heater capable of executing a hot water storage operation by using commercial power or home-generated power to heat low temperature water to high temperature water and then storing the high temperature water in a hot water storage tank, the electric water heater performs a comparison of: a power fee in the case of execution of the hot water storage operation using the commercial power in a late-night power time slot when the power fee is inexpensive, versus a power fee likely to be obtained by selling power generated in the case of executing hot water storage operation using home-generated power, and then the electric water heater automatically performs the hot water storage operation automatically is the case that is economically advantageous among the cases using late-night power and home-generated power. Furthermore, a method is described of forecasting a power generation amount of photovoltaic electricity on the basis of data on previously collected meteorological information (external temperature, hours of daylight, and the like), or photovoltaic power generation amounts and weather forecast, further forecasting a home internal power consumption amount from a past pattern of a home power consumption amount, calculating an excess power amount as a difference between these forecast power amounts, determining a hot water storage amount by nighttime power and a hot water storage amount by photovoltaic power, and performing water heating by photovoltaic power in a time slot when the forecast excess power exceeds the water heating power (for example, see Patent Literature 1).

### Citation List

### Patent Literature

Patent Literature 1: Unexamined Japanese Patent Application Kokai Publication No. 2013-245839
Patent Literature 2: EP 2 773 008.

### Summary of Invention

### Technical Problem

However, although the conventional storage-type electric water heater is made to perform the hot water storage operation in the time slot when sufficient power is forecast to be securable for performing the hot water storage operation by excess power from photovoltaic power, sometimes the amount of photovoltaic power generation decreases due to factors such as temporary cloudiness, or the amount of power used in the home increases due to the use of other home electrical equipment and the like, resulting in a state of power sale in which the excess power is insufficient. A unit price of power purchase in a day time slot is generally higher than a unit price of power purchase in a late-night time slot, and when such a state of power purchase continues, a problem may result in that the purchased-power fee increases to an amount not anticipated by the user.

In order to solve the aforementioned problem, an objective of the present disclosure is to provide a water heater control system and a storage-type electric water heater equipped with a means for suppressing an increase in the purchased-power fee,
in a case where the storage-type electric water heater performs a water-heating operation (hot water storage operation) using photovoltaic power, by suppressing or stopping the water heating operation of the storage-type electric water heater when purchase of power from a commercial power supply occurs due to lowering of photovoltaic power due to temporary cloudiness and the like, or due to a non-forecasted increase in in-home-use power due to use of home electric equipment and the like, so that the purchased-power fee becomes greater than or equal to a prescribed value.

### Solution to Problem

In order to attain the aforementioned objective, a water heater control system according to claim 1 is proposed.

### Advantageous Effects of Invention

According to the water heater control system of the present disclosure, the water heating operation of the storage-type electric water heater is stopped or suppressed when the power fee data of purchased power supplied to the electrical load circuit from the commercial power supply is higher than the standard monetary amount, thereby enabling suppression of increase in the purchased-power fee when excess power is insufficient and a power-purchasing state occurs due to factors such as lowering of the generated power amount of photovoltaic electricity due to temporary cloudiness and the like, or increasing of the in-home utilized power amount due to use of other home electric equipment and the like in the electrical load circuit.

According to the invention, the controller stops or suppresses the water heating operation of the heating unit when the power fee data of the purchased power supplied to the electrical load circuit of the storage-type electric water heater and the like from the commercial power supply is higher than the standard monetary amount, thereby enabling suppression of an increase in costs of the purchased-power amount while suppressing an increase in purchased power outlay.

### Brief Description of Drawings

FIG. 1 is an overall configuration drawing illustrating a configuration of a water heater control system according to Embodiment 1 of the present disclosure;
FIG. 2 is a flowchart illustrating overall processing of water heating control with respect to a storage-type electric water heater by a HEMS controller that is a control device of the water heater control system according to Embodiment 1 of the present disclosure;
FIG. 3 is a flowchart illustrating time slot water heating allocation processing occurring in the HEMS controller that is the control device of the water heater control system according to Embodiment 1 of the present disclosure;
FIG. 4 is a flowchart illustrating nighttime power time slot water heating control performed with respect to the storage-type electric water heater in a nighttime power time slot by the HEMS controller that is the control device of the water heater control system according to Embodiment 1 of the present disclosure;
FIG. 5 is a flowchart of daytime power time slot water heating control performed with respect to the storage-type electric water heater in a daytime power time slot by the HEMS controller that is the control device of the water heater control system according to Embodiment 1 of the present disclosure;
FIGS. 6A and 6B are time charts of a one-day cycle illustrating an example of communication data and operations occurring in constituent elements for the water heater control system according to Embodiment 1 of the present disclosure;
FIGS. 7A to 7F are time charts illustrating an example of daily fluctuations in a generated-power amount of a photovoltaic power generator, a used power amount of an electrical load circuit, and the like at each prescribed time period in Embodiment 1 of the present disclosure;
FIG. 8 is a flowchart of daytime power time slot water heating control performed with respect to a storage-type electric water heater in a daytime power time slot for a HEMS controller that is a control device of a water heater control system according to Embodiment 2 of the present disclosure;
FIGS. 9A and 9B are time charts of a one-day cycle illustrating an example of communication data and operations occurring at constituent elements in the water heater control system according to Embodiment 2 of the present disclosure;
FIGS. 10A to 10F are time charts illustrating an example of daily fluctuations in the generated-power amount of the photovoltaic power generator, the used power amount of the electrical load circuit, and the like at each prescribed time period in Embodiment 2 of the present disclosure;
FIG. 11 is a chart illustrating power levels of a water heating operation of a storage-type electric hot water-supplying of the water heater control system according to Embodiment 3 of the present disclosure;
FIG. 12 is a flowchart of time slot water heating allocation processing occurring in a HEMS controller that is a control device of the water heater control system according to Embodiment 3 of the present disclosure;
FIG. 13 is chart for description of a excess-power water heating power amount for the water heater control system according to Embodiment 3 of the present disclosure;
FIGS. 14A and 14B are flowcharts of daytime power time slot water heating control performed with respect to the storage-type electric water heater in the daytime power time slot for a HEMS controller that is a control device of a water heater control system according to Embodiment 3 of the present disclosure;
FIGS. 15A and 15B are flowcharts of daytime power time slot water heating control performed with respect to the storage-type electric water heater in the daytime power time slot by a HEMS controller that is a control device of a water heater control system according to Embodiment 4 of the present disclosure;
FIG. 16 is a drawing illustrating relationships between a water heating operation and a water heating end time, a water heating required time period, and a water heating execution time period in Embodiment 4 of the present disclosure;
FIG. 17 is a drawing for supplementary description of water heating control occurring in the daytime power time slot in Embodiment 4 of the present disclosure;
FIG. 18 is a drawing for supplementary description of water heating control occurring in the daytime power time slot in Embodiment 4 of the present disclosure;
FIG. 19A is a chart illustrating a modified example of a standard monetary amount of water heating control occurring in the daytime power time slot in Embodiment 4 of the present disclosure;
FIG. 19B is a chart illustrating the modified example of the standard monetary amount of water heating control occurring in the daytime power time slot in Embodiment 4 of the present disclosure;
FIG. 20A is a chart illustrating the modified example of a prescribed value for water heating control occurring in the daytime power time slot in Embodiment 4 of the present disclosure;
FIG. 20B is a chart illustrating the modified example of a prescribed value for water heating control occurring in the daytime power time slot in Embodiment 4 of the present disclosure;
FIG. 21 is a flowchart of daytime power time slot water heating control performed with respect to the storage-type electric water heater in the daytime power time slot by a HEMS controller that is a control device of a water heater control system according to Embodiment 5 of the present disclosure;
FIGS. 22A and 22B are flowcharts of daytime power time slot water heating control performed with respect to the storage-type electric water heater in the daytime power time slot by a HEMS controller that is a control device of a water heater control system according to Embodiment 6 of the present disclosure;
FIG. 23 is a drawing illustrating a configuration of a storage-type electric water heater and peripheral equipment thereof according to Embodiment 7 of the present disclosure;
FIGS. 24A and 24B are flowcharts illustrating an example of operations of a controller of the storage-type electric water heater according to Embodiment 7 of the present disclosure;
FIGS. 25A and 25B are flowcharts illustrating operations occurring in a daytime power time slot of a controller of a storage-type electric water heater according to Embodiment 8 of the present disclosure;
FIGS. 26A to 26C are flowcharts illustrating operations occurring in a daytime power time slot of a controller of a storage-type electric water heater according to Embodiment 9 of the present disclosure;
FIGS. 27A to 27C are flowcharts illustrating operations occurring in a daytime power time slot of a controller of a storage-type electric water heater according to Embodiment 10 of the present disclosure;
FIGS. 28A to 28C are flowcharts illustrating operations occurring in a daytime power time slot of a controller of a storage-type electric water heater according to Embodiment 11 of the present disclosure;
FIGS. 29A and 29B are charts illustrating a purchase power amount unit price of a standard monetary amount, and a modified example on the basis of the purchase power amount unit price, in water heating control occurring in the daytime power time slot.

### Description of Embodiments

### Embodiment 1

Embodiment 1 of the present disclosure is described below in detail with reference to drawings. In the drawings, components that are the same or equivalent are assigned the same reference signs.

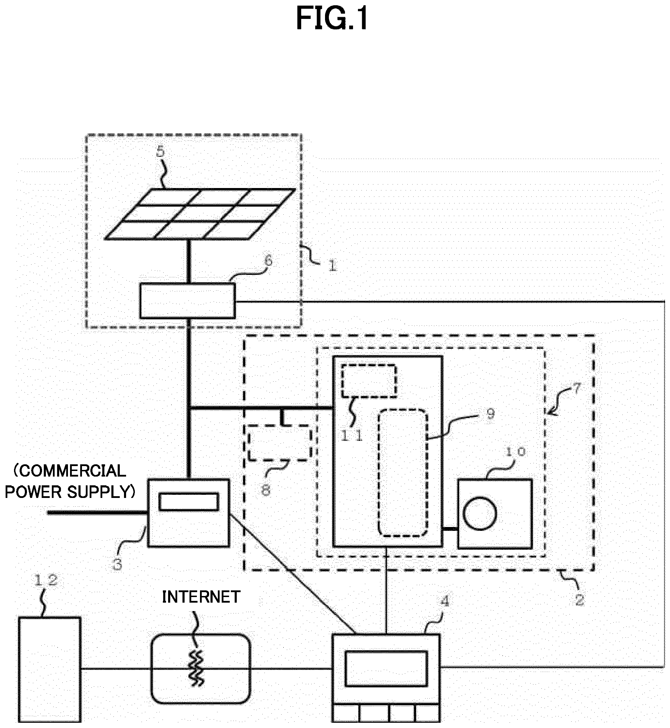

FIG. 1 is a drawing illustrating a configuration of a water heater control system according to the present embodiment. In the drawing, the water heater control system is equipped with: a photovoltaic power generator 1 to interconnect with a commercial power supply, an electrical load circuit 2 to use power generated by the photovoltaic power generator and power of the commercial power supply, a power meter 3 to detect a sold-power amount as reverse-flowing power from the photovoltaic power generator 1 to the commercial power supply and a purchased-power amount as supplied power from the commercial power supply to the electrical load circuit 2, and a HEMS controller 4 that is a control device to acquire data detected by the power meter 3 and control operation of the electrical load circuit 2.

The photovoltaic power generator 1 is equipped with: a PV panel 5 connected to a consumer power source line connected to a power line of the commercial power supply, to generate direct-current electric energy from light energy such as sunlight, and a power conditioner 6 to convert the direct-current electric energy generated by the PV panel 5 to alternating-current electric energy and capable of interconnection with a system of the commercial power supply. The power conditioner 6 is equipped with a means for detection of a system voltage of the commercial power supply, and when a voltage of the direct-current electric energy generated by the PV panel 5 is greater than or equal to a prescribed voltage, the power conditioner 6 operates to output reverse-flow current synchronized with the system voltage. The power conditioner 6 sends data, on the power amount output to the commercial power supply system from the photovoltaic power generator 1 by the reverse-flow current, to the HEMS controller 4 as generated power amount data.

The electrical load circuit 2, in addition to the storage-type electric water heater 7, includes another load 8 that is electric equipment such as an air conditioner, a TV, a vacuum cleaner, a rice cooker, and the like, and the electrical load circuit 2 is connected to the consumer power source line connected to the photovoltaic power generator 1. The storage-type electric water heater 7 is equipped with: a hot water storage tank 9 to store high temperature water and low temperature water, a heat pump 10 that is a heating unit for heating the low temperature water to the high temperature water, and a controller 11 to perform overall control of the storage-type electric water heater 7. The hot water storage tank 9 has multiple temperature sensors and can detect an amount and temperature of the high temperature water stored in the hot water storage tank. The heat pump 10 achieves a heat pump cycle driven by an electric-type compressor and the like. The controller 11 is equipped with a function for communication with the HEMS controller 4, notifies the HEMS controller 4 of state information of the storage-type electric water heater 7 (such as low temperature water (feed water) temperature, high temperature water (heated water) temperature, high temperature water amount (amount of remaining hot water) in the hot water storage tank, and the like), and receives commands from the HEMS controller 4. The controller 11, on the basis of the received commands, performs the water heating operation (hot water storage operation) by using heat in the atmosphere via the heat pump cycle of the heat pump 10 to heat the low temperature water, generating the high temperature water, and storing the high temperature water in the hot water storage tank 9. The high temperature water stored in the hot water storage tank 9 is supplied to hot water supply valves at each location, is used for heating bath tub water, and the like. Further, a portion of the electric equipment including in the other load 8 is also equipped with the function for communication with the HEMS controller 4, and in addition to sending to the HEMS controller 4 notification of operation state information, operates by receiving commands from the HEMS controller 4. Further, the electrical load circuit 2 including the storage-type electric water heater 7 uses the purchased power supplied from the power system of the commercial power supply and the photovoltaic power generated by the photovoltaic power generator 1.

The power meter 3 is arranged at an interconnection point between the consumer power source line connected to the photovoltaic power generator 1 and the electrical load circuit 2 and the power line of the commercial power supply, and the power meter 3 detects periodically at a prescribed cycle time the purchased-power amount supplied from the commercial power supply power line to the consumer power source line. Further, the power meter 3 detects periodically at a prescribed cycle time the sold-power amount due to excess power generated when the power amount generated by the photovoltaic power generator 1 exceeds the power amount consumed by the power load circuit 2. The power meter 3 is equipped with data transmission means and transmits the detected purchased-power amount data and sold-power amount data to the HEMS controller 4.

The HEMS controller 4 is equipped with communication means and is capable of receiving the generated-power amount data transmitted form the power conditioner 6 of the photovoltaic power generator 1, and the purchased-power amount data and sold-power amount data transmitted from the power meter 3. Further, the HEMS controller 4 can receive state information of the storage-type electric water heater 7 and the operation state information from a portion of the electrical equipment that is the other load, and the HEMS controller 4 can also transmit operation commands to the storage-type electric water heater 7 and the portion of the electrical equipment that is the other load. The HEMS controller 4 can communicate via the internet with the cloud server 12 and sends to the cloud server 12 the generated-power amount data of the photovoltaic power generator 1 and the operation state data of the electrical load circuit 2 including the storage-type electric water heater, the sold-power amount data, and the purchased-power amount data. The cloud server 12 stores and accumulates the photovoltaic power amount data and the like sent from the HEMS controller 4 in association with meteorological information. Then the cloud server 12 utilizes the accumulated stored data and weather forecast data, forecasts changing of the generated-power amount of the photovoltaic power generator 1 and a used power amount of an electrical load circuit 8 except for the storage-type electric water heater, and forecasts changing of the excess power amount as the difference between used power amount and the generated-power amount. The HEMS controller 4 can acquire change data of the excess power amount and change data of the power generation amount occurring at the photovoltaic power generator 1 forecast by the cloud server 12.

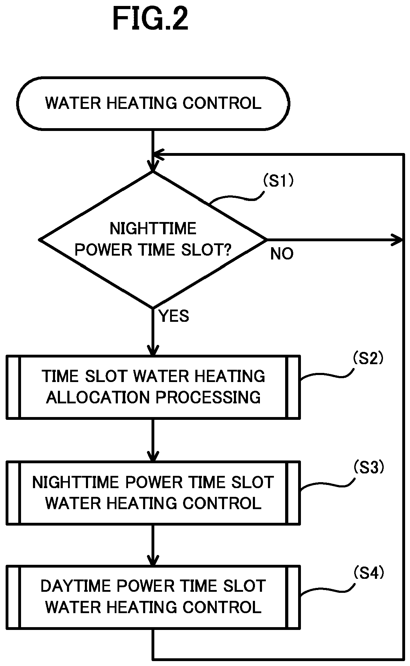

FIG. 2 is a flowchart illustrating overall processing of the water heating control by the HEMS controller 4 with respect to the storage-type electric water heater 7. The HEMS controller 4 waits for a nighttime power time slot to occur (step S1), performs time slot water heating allocation processing to allocate water heating time periods (power amounts, hot water amounts) of each time slot (nighttime, daytime) (step S2), executes control of the water heating operation of the storage-type electric water heater occurring in the nighttime power time slot when the electric utility rate is relatively cheap (nighttime power time slot water heating control) (step S3), then executes control of the water heating operation of the storage-type electric water heater using the excess power in the daytime time slot when the electric utility rate is relatively expensive (daytime power time slot water heating control) (step S4), and returns to step S1.

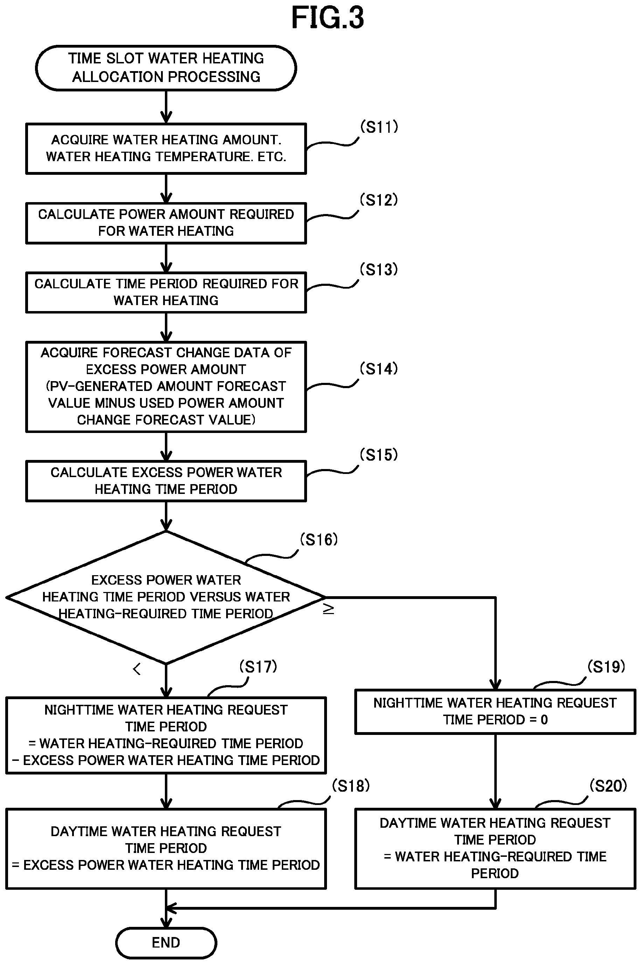

FIG. 3 is a flowchart of the time slot water heating allocation processing (step S2) occurring in the HEMS controller 4, and such processing is executed, for example, at the start of the nighttime power time slot. In the time slot water heating allocation processing, on the basis of a high temperature water (hot water) amount required to be heated by the storage-type electric water heater 7 by a prescribed time of the following day, a forecast excess power due to power generation by the photovoltaic power generator 1, and the like, a required time period (time period required for water heating) is found for the high temperature water heating operation of the storage-type electric water heater 7, and the allocations are determined for request time periods for the water heating operations occurring in the nighttime power time slot and in the daytime power time slot (the nighttime water heating request time period and the daytime water heating request time period) that have different power amount unit prices.

In the time slot water heating allocation processing as illustrated in FIG. 3, the HEMS controller 4 firstly obtains via communication data on water heating temperature and heating high temperature water amount from the storage-type electric water heater 7 (step S11), and calculates the power amount required for water heating (step S12). For example, the power amount required for heating 300 liters of low temperature water (25°C) to high temperature water (85°C), if the heating efficiency is 100%, becomes 300 liters × (85°C - 25°C) × 4.19/3600 = 21.0 kWh. The time period (water heating-required time period) required for water heating is found by dividing this power amount by a water heating rated power of the electric water heater (step S13). For example, when the water heating rated power is taken to be 2.0 kW, the water heating-required time period becomes 21.0 kWh/2.0 kW = 10.5 h.

Thereafter, the cloud server 12 is accessed by use of the internet and the like, and the forecast change data is acquired for the excess power amount due to power generation by the photovoltaic power generator 1 on the following day (power amount obtained by subtracting from the photovoltaic power amount the used power amount due to the electrical load circuit 8 except for the storage-type electric water heater) (step S14). A time period is found (excess power water heating-enabled time period) as a time period in which the excess power forecast value exceeds a prescribed value (for example, rated power = 2.0 kW), and the excess power water heating time period is a time period obtained by multiplying the excess power water heating-enabled time period by a prescribed coefficient (for example, 0.80) less than 1 to impart a margin to the excess power water heating-enabled time period (step S15). The excess power water heating time period and the water heating-required time period are compared (step S16), and if the water heating-required time period is longer, a time period obtained by subtracting the excess power water heating time period from the water heating-required time period is allocated to the water heating request time period occurring in the nighttime power time slot (step S17), and the excess power water heating time period is allocated to the water heating request time period of the daytime power time slot (step S18). On the other hand, if the excess power water heating time period is less than or equal to the water heating-required time period, then the water heating request time period in the nighttime power time slot is set to 0 (step S19), and all of the water heating-required time period is allocated to the water heating request time period in the daytime power time slot (step S20).

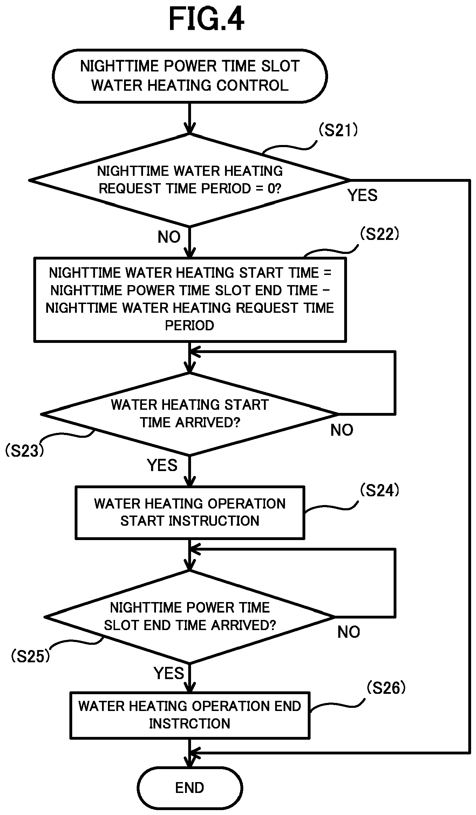

FIG. 4 is a flowchart of the nighttime power time slot water heating control performed by the HEMS controller 4 with respect to the storage-type electric water heater 7 in the nighttime power time slot. The HEMS controller 4 executes the nighttime power time slot water heating control in the nighttime power time slot after the time slot water heating allocation processing. The HEMS controller 4 firstly determines whether the nighttime water heating request time period is 0 (step S21), and if the nighttime water heating request time period is 0, then the nighttime power time slot water heating control ends due to there being no request for the water heating operation of the storage-type electric water heater occurring in the nighttime power time slot. If the nighttime water heating request time period is not 0, the nighttime water heating start time is taken to be the time earlier than the nighttime power time slot end time by the nighttime water heating request time period (step S22), the HEMS controller 4 waits until the nighttime water heating start time (step S23) and instructs the storage-type electric water heater 7 to start the water heating operation (step S24). Thereafter, the HEMS controller 4 waits for the nighttime power time slot end time that is the end of the nighttime water heating operation (step S25), instructs the storage-type electric water heater 7 to end the water heating operation (step S26), and ends the nighttime power time slot water heating control. From the instructing of the storage-type electric water heater 7 to start the water heating operation until the instructing to end the water heating operation (step S24 to step S26), the HEMS controller 4 continues the water heating operation, regardless of the power amount data and purchased-power fee data of the purchased power detected by the power meter 3.

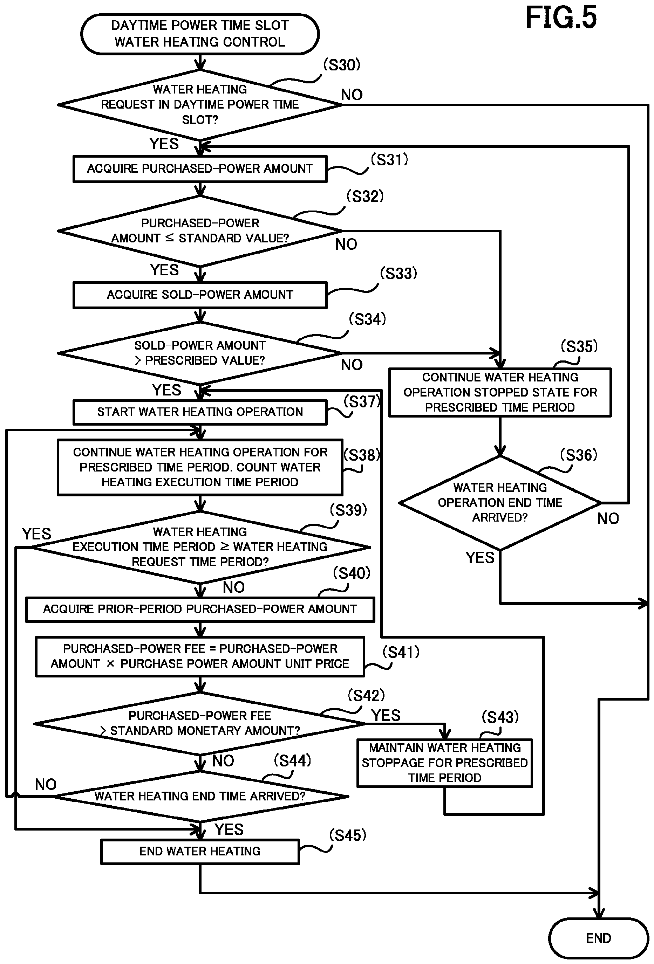

FIG. 5 is a flowchart of daytime power time slot water heating control performed by the HEMS controller 4 with respect to the storage-type electric water heater 7 in the daytime power time slot. In the daytime power time slot water heating control processing executed by the HEMS controller 4 upon occurrence of the daytime power time slot, firstly the HEMS controller 4 determines whether a water heating request occurs in the daytime power time slot (step S30), and if there is no water heating request, the HEMS controller 4 ends the processing of the daytime power time slot water heating control. If there is a water heating request, the HEMS controller 4 acquires the purchased-power amount detected by the power meter 3 (step S31), and the HEMS controller 4 determines whether the value of the purchased-power amount is less than or equal to a standard value (step S32). If the purchased-power amount is less than or equal to the standard value, the HEMS controller 4 acquires the sold-power amount detected by the power meter 3 (step S33), and the HEMS controller 4 determines whether the value of the detected sold-power amount exceeds a prescribed value (step S34). If the purchased-power amount exceeds the standard value in step S32, or if the sold-power amount in step S34 is less than or equal to the prescribed value, the stopped state of the water heating operation of the storage-type electric water heater 7 continues for a prescribed time period (step S35), and thereafter, the HEMS controller 4 determines whether at this point in time there is arrival of the water heating operation end time (step S36). If at this point in time there is arrival of the water heating operation end time, the HEMS controller 4 ends the daytime power time slot water heating control, and the HEMS controller 4 returns to step S31 if the water heating operation end time is not reached.

If the sold-power amount in step S34 exceeds the prescribed value, the HEMS controller 4 instructs the storage-type electric water heater 7 to start the water heating operation (step 37), and thereafter, in addition to causing continuation of the water heating operation for a prescribed time period, calculates a cumulative execution time period of the water heating operation (step S38), and determines whether the water heating execution time period is greater than or equal to the water heating request time period (step S39). When the water heating execution time period does not reach the water heating request time period, the HEMS controller 4 acquires from the power meter 3 data of the purchased-power amount occurring in the prescribed time period (step S40), and calculates data of the purchased-power fee by multiplying the purchased-power amount data by the purchase power amount unit price (step S41). The purchased power occurs when the generated power of the photovoltaic power generator 1 is less than the consumed power (used power) of the electrical load circuit 2 including the storage-type electric water heater 7. The data of the purchase power amount price may be acquired via the internet from a server of the power-providing company of the commercial power supply, and in the case in which the power amount unit prices are determined for each time slot (nighttime power time slot, daytime power time slot) beforehand by a power contract, the power amount unit prices may be stored in an internal storage provided for the HEMS controller 4.

Thereafter, the calculated purchased-power fee data and a standard monetary amount are compared (step S42). The standard monetary amount is assumed, for example, to be the electric power rate in the case of performance of the water heating operation of the storage-type electric water heater by late-night power, when the purchase power amount unit price becomes the most inexpensive. When the purchased-power fee data exceeds the standard monetary amount, the purchased-power fee increases due to power used by the storage-type electric water heater 7 in the water heating operation, and thus the HEMS controller 4 instructs the storage-type electric water heater 7 to end the water heating operation occurring in the next prescribed time period, maintains this state for the prescribed time period to suppress the increase of the purchased power outlay (step S43), and returns to step S37. In the case in which the purchased-power fee data in step S42 is less than or equal to the standard monetary amount, the excess power occurring due to generated power of the photovoltaic power generator 1 can be used effectively in the water heating operation of the storage-type electric water heater 7, and thus the HEMS controller 4 determines whether at this point in time there is arrival of the water heating operation end time (step S44), and if the present time is prior to the water heating operation end time, returns to step S38 and causes the storage-type electric water heater 7 to continue the water heating operation. If there is arrival of the water heating end time in step S44, or if the water heating execution time period reaches the water heating request time period in step S39, the HEMS controller 4 gives an instruction to end the water heating operation (step S45) and ends the daytime power time slot water heating control.

Further, in the aforementioned description as illustrated in step S31 to step S34 of FIG. 5, when the HEMS controller 4 instructs the storage-type electric water heater 7 to start the water heating operation in the daytime power time slot, the HEMS controller 4 acquires the data of the purchase-power amount and compares the data of the purchase-power amount to the standard value prior to acquiring the data of the sold-power amount detected by the power meter 3 and comparing the data of the sold-power amount to the prescribed value. However, the comparison determination processing (step S31 and step S32) of the purchased-power amount data may be omitted.

Further, the HEMS controller 4 of the water heater control system according to the present embodiment in the aforementioned description as indicated in step S39 of FIG. 5 gives an instruction to end the water heating operation when the water heating execution time period of the storage-type electric water heater 7 occurring in the daytime power time slot reaches the water heating-required time period (request time period). However, step S39 may be omitted, or rather than performing step S39, the HEMS controller 4 may acquire data on the condition of the hot water storage tank 9 of the storage-type electric water heater 7 and may cause water heating to stop when the high temperature water in the hot water storage tank 9 reaches an accumulated heat upper limit condition meaning that the tank is full of the high temperature water. If the determination of step S39 is not performed, high temperature water can be stored in the hot water storage tank 9 in a range of the capacity thereof and in an amount exceeding an amount requested by the user without greatly increasing the purchased-power fee, and even when the use of high temperature water increases to an amount greater than anticipated, occurrence of running out of high temperature water in the hot water storage tank 9 can be prevented and the purchased power amount occurring in the time slot of high purchase power amount unit price can be suppressed. Further, even in the case in which the amount of used high temperature water is not as high as anticipated, accumulated thermal energy for the next day can be carried forward to the following day, and thus the power amount required for water heating in the following day is suppressed, and the purchased power amount and the purchased-power fee can be suppressed.

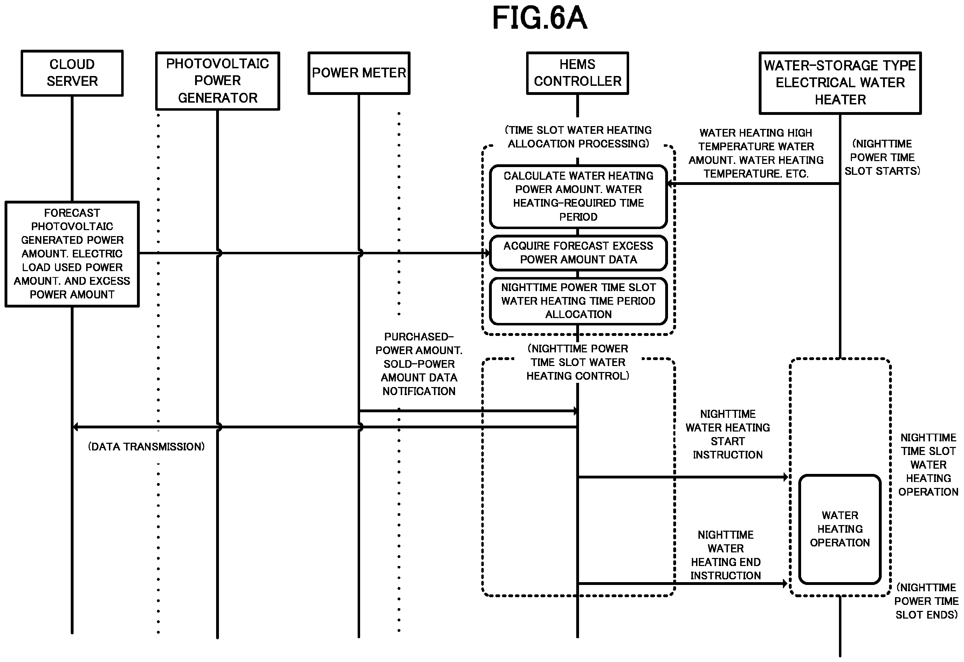

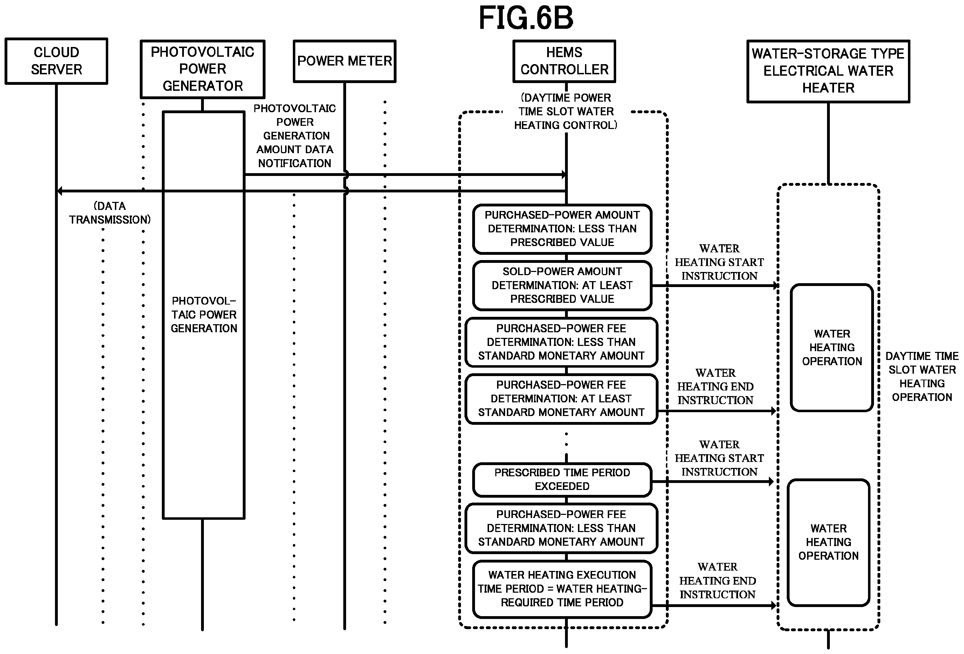

FIGS. 6A and 6B illustrate time charts of a single day cycle in an example of operations and communication data occurring for the HEMS controller 4, the photovoltaic power generator 1, the storage-type electric water heater 7, the cloud server 12, and the power meter 3 of the water heater control system according to the present embodiment. The HEMS controller 4 that is the control device of the water heater control system acquires at prescribed time periods the power amount data of the purchased power supplied to the consumer power source line from the power line of the commercial power supply and the power amount data of sold power flowing in reverse to the power line of the commercial power supply from the consumer power source line detected by the power meter 3, and the HEMS controller 4 transmits the acquired data to and accumulates the acquired data on the cloud server 12. Further, the HEMS controller 4 acquires the generated-power amount data of the photovoltaic power generator 1 and the operation condition data of the storage-type electric water heater 7 and sends such data to and accumulates such data on the cloud server 12. In the water heater control system according to the present embodiment, the cloud server 12 at the start of the one-day control cycle utilizes data such as the previously accumulated photovoltaic power amount data to forecast the generated-power amount of the photovoltaic power generator 1 and the change of the used power amount of the electric load circuit 2, and the HEMS controller 4 calculates the change of the forecast excess power amount by subtracting the forecast used power amount of the electrical load circuit 8 except for the storage-type electric water heater from the forecast generated-power amount of the photovoltaic power generator 1. The HEMS controller 4 acquires data such as the required high temperature water amount and the water heating temperature difference (a high temperature water temperature minus a low temperature water temperature) from the storage-type electric water heater 7, finds the power amount required for the water heating operation, and calculates the time period required for water heating. Then the HEMS controller 4 allocates the water heating time period occurring in the nighttime power time slot on the basis of the change data of the forecast excess power amount forecast by the cloud server 12. Thereafter in the final stage of the nighttime power time slot, the HEMS controller 4 causes execution of the water heating operation of the storage-type electric water heater 7 allocated to the nighttime power time slot. Thereafter, when the HEMS controller 4 in the daytime power time slot acquires from the power meter 3 data on the sold-power amount data greater than or equal to the prescribed power amount, the HEMS controller 4 instructs the storage-type electric water heater 7 to start the water heating operation, and when the purchased-power fee calculated by multiplying the purchase power amount unit price by the power amount data of purchased power acquired from the power meter 3 is greater than or equal to the standard monetary amount, the HEMS controller 4 instructs the storage-type electric water heater 7 to stop the water heating operation for a prescribed time period. After instructing the storage-type electric water heater 7 to start the water heating operation, when the water heating execution time period reaches the water heating-required time period, the HEMS controller 4 instructs the storage-type electric water heater 7 to stop water heating, thereby ending the water heating operation.

Further, in the aforementioned description, the cloud server 12 performs the forecasting of the excess power amount by using data such as the generated-power amount data of the photovoltaic power generator 1 accumulated in the cloud server 12. However, the HEMS controller 4 may store the data such as the photovoltaic electricity amount, and by using such data, may perform the forecasting of the generated-power amount of the photovoltaic power generator 1 and the excess power amount. Further, data such as the generated-power amount data may be accumulated in association with weather information, and information of a weather forecast may be used to forecast the excess power amount.

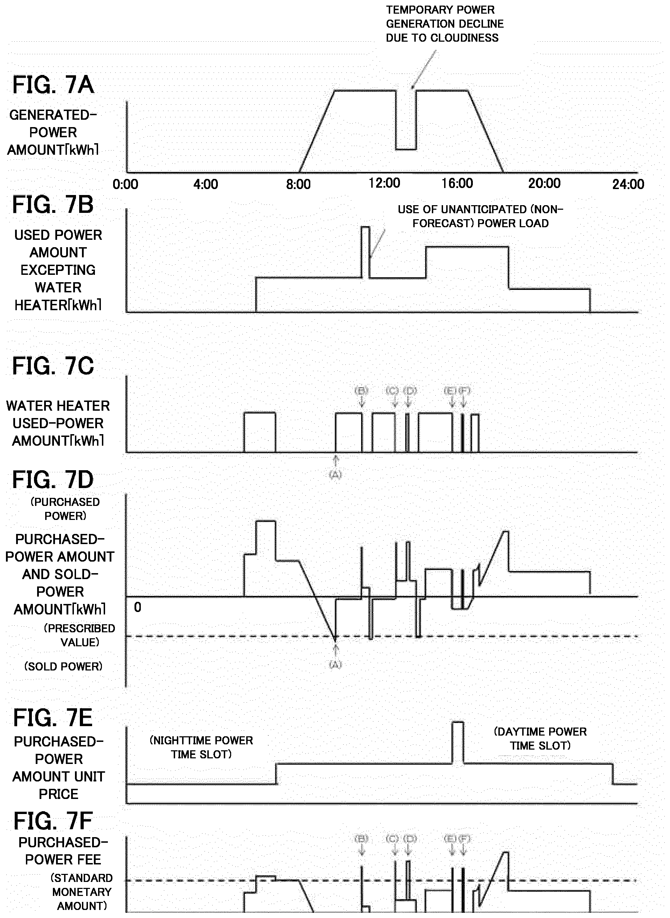

FIG. 7A is a time chart illustrating at each prescribed time period an example of daily fluctuations in the generated-power amount of the photovoltaic power generator 1; FIG. 7B is a time chart illustrating at each prescribed time period an example of daily fluctuations in the used power amount of the electrical load circuit 8 except for the storage-type electric water heater; FIG. 7C is a time chart illustrating at each prescribed time period an example of daily fluctuations in the used power amount of the storage-type electric water heater 7; FIG. 7D is a time chart illustrating at each prescribed time period an example of daily fluctuations in the purchased-power amount supplied from the commercial power supply and the sold-power amount for power flowing back to the commercial power supply detected by the power meter 3; FIG. 7E is a time chart illustrating at each prescribed time period an example of daily fluctuations in the purchased power amount unit price; and FIG. 7F is a time chart illustrating at each prescribed time period an example of daily fluctuations in the purchased-power fee. "(A)" shown in FIG. 7D is the point in time when the sold-power amount (excess power amount) in the daytime power time slot first becomes greater than or equal to a prescribed value, and thus is when the HEMS controller 4 instructs the storage-type electric water heater 7 to start the water heating operation. "(B)", "(C)", "(D)", "(E)", and "(F)" indicated in FIG. 7F are points in time when the purchased-power fee during the water heating operation of the storage-type electric water heater 7 occurring in the daytime power time slot becomes greater than or equal to the standard monetary amount so that the HEMS controller 4 instructs the storage-type electric water heater 7 to stop the water heating operation for the prescribed time period. At the point "(B)" due to used-power increase of the electrical load circuit 8 except for the storage-electric water heater, at the point "(C)" due to decrease of the generated-power amount of the photovoltaic power generator 1 affected by clouds and the like, and at the point "(D)" due to non-recovery of the generated-power amount of the photovoltaic power generator 1, when the water heating operation of the storage-type electric water heater 7 restarts, the purchased power amount purchased from the commercial power supply increases so that the purchased-power fee exceeds the standard monetary amount. Further, at the point "(E)" due to increase of the purchase power amount unit price, and at the point "(F)" due to continuation of the state in which the purchase power amount unit price is high, at the time of restarting of the water heating operation of the storage-type electric water heater 7, the purchased-power fee exceeds the standard monetary amount so that the HEMS controller 4 causes the storage-type electric water heater 7 to end the water heating operation. After causing ending of the water heating operation for the prescribed time period, the water heating operation restarts, and when the purchased-power fee does not exceed the standard monetary amount, the HEMS controller 4 causes the heating operation to continue.

In the aforementioned manner, in accordance with the water heater control system according to the present embodiment, when the water heating operation of the storage-type electric water heater 7 is performed using excess power from generated power of the photovoltaic power generator 1, in the case in which the excess power shortfall becomes temporarily large due to clouds and the like so that the purchased-power fee is greater than or equal to the standard monetary amount, or in the case in which the purchase amount unit price increases so that the purchased-power fee exceeds the standard monetary amount, the water heating operation of the storage-type electric water heater 7 stops for the prescribed time period, thereby enabling suppression of the increase of the purchased power outlay. Particularly in the case of the high purchase power amount unit price, when the purchased-power fee exceeds the standard value monetary amount even through the purchased-power amount is low, the water heating operation of the storage-type electric water heater 7 can be limited. Further, due to restart of the water heating operation after the prescribed time period after stopping the water heating operation due to the purchased-power fee exceeding the standard monetary amount, the high temperature water amount requested by the storage-type electric water heater 7 can be secured.

Further, according to the water heater control system of the present embodiment, the HEMS controller 4 operates in a water-heating continuing operation mode that continues the water heating operation of the high temperature water regardless of the purchased-power fee in the water heating operation of the storage-type electric water heater occurring in the late-night power time slot, and the HEMS controller 4 operates in a water heating-limiting operation mode that stops for the prescribed time period the water heating operation when the purchased-power fee exceeds the standard monetary amount in the daytime power time slot, and thus the requested water-heating hot water amount can be secured while suppressing the purchased-power fee.

Further, in the water heater control system according to the present embodiment as illustrated in FIG. 3, although the HEMS controller 4 finds the water heating-required time period and performs allocation of time periods of the water heating operation occurring in the nighttime power time slot and the daytime power time slot, the state information (water heating request amount and the like) of the storage-type electric water heater 7 may be sent to the cloud server 12, the cloud server 12 may calculate the water heating-required time period, the cloud server 12 may allocate times of the water heating operation occurring in the nighttime power time slot and the daytime power time slot, the cloud server 12 may set a water heating operation start time and the water heating operation end time, and may transmit such data to the HEMS controller 4.

Further, the power meter 3 of the water heater control system according the aforementioned embodiment transmits the data of the detected purchased-power amount and sold-power amount, and the HEMS controller 4 calculates the purchased-power fee or the sold-power electric fee by multiplying the received purchased-power amount data by the purchase power amount unit price or by multiplying the received sold-power amount data by the sold-power amount unit price. However, the power meter 3 may store the purchase power amount unit price data or the sold-power amount unit price data, may calculate the purchased-power fee by multiplying the purchase power amount unit price data by the purchased-power amount data or may calculate the sold-power fee by multiplying the sold-power amount unit price data by the sold-power amount data, and may transmit such calculated data; and the cloud server 12 may acquire the purchased-power amount data or the sold-power amount data from the power meter 3, may calculate the purchased-power fee or the sold-power electric fee, and may transmit the purchased-power fee or the sold-power electric fee to the HEMS controller 4. The purchase power amount unit price data or the sold-power amount unit price data for calculation of the purchased-power fee or the sold-power electric utility rate may be determined beforehand by contract, or the power-providing company of the commercial power supply may provide notification of the purchase power amount unit price data or the sold-power amount unit price data to the HEMS controller 4 or the power meter 3 as needed.

### Embodiment 2

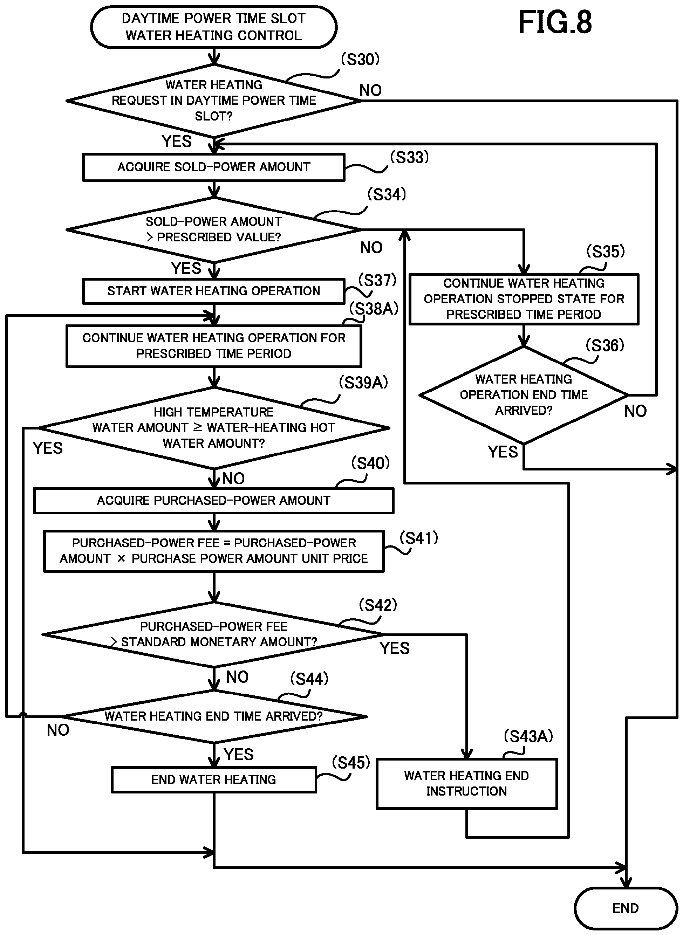

When the electricity utility rate of purchased power during the water heating operation of the storage-type electric water heater 7 exceeds the standard monetary amount, although the HEMS controller 4 of the water heater control system according to Embodiment 1 stops the water heating operation of the storage-type electric water heater 7, and causes the restart of the water heating operation after the prescribed time period, as long as the sold-power amount exceeds the prescribed value, the water heating operation of the storage-type electric water heater 7 may restart. FIG. 8 illustrates a flowchart of daytime power time slot water heating control with respect to the storage-type electric water heater 7 occurring in the HEMS controller 4 of the water heater control system according to Embodiment 2. Further, the configuration of the water heater control system according to the present embodiment is similar to that of the water heater control system according to Embodiment 1, and drawings and descriptions concerning such configuration are omitted below. Further, the overall processing of the water heating control with respect to the storage-type electric water heater 7, the time slot water heating allocation processing, and the nighttime power time slot water heating control processing occurring in the HEMS controller 4 of the water heater control system according to the present embodiment are similar to those of the flowcharts illustrated in FIG. 2 to FIG. 4 for Embodiment 1, and such drawings and descriptions are omitted below. The water heating control by the HEMS controller 4 of the water heater control system according to the present embodiment occurring in the daytime power time slot with respect to the storage-type electric water heater is described below with reference to FIG. 8. Further, the same reference numerators are assigned for processing that is the same as, or corresponds to that of, FIG. 5.

In FIG. 8, determination is firstly made as to whether a water heating request occurs in the daytime power time slot (step S30), and if there is no water heating request, the processing of the daytime power time slot heating control ends. However, if there is a water heating request, the sold-power amount detected by the power meter 3 is acquired (step S33), and determination is made as to whether the value of the sold-power amount detected by the power meter 3 exceeds a prescribed value (step S34). When the sold-power amount is less than or equal to the prescribed value, the stopped state of the water heating operation of the storage-type electric water heater 7 continues for a prescribed time period (step S35), and thereafter, determination is made as to whether the time at that point reaches the water heating operation end time (step S36). If the result of the determination is that the water heating operation end time is reached, the daytime power time slot water heating control ends, and if the water heating operation end time is not reached, processing returns to step S33.

If the sold-power amount exceeds the prescribed value in step S34, the storage-type electric water heater 7 is instructed to start the water heating operation (step S37), and thereafter, the storage-type electric water heater 7 is made to continue the water heating operation for the prescribed time period (step S38A). Thereafter, determination is made as to whether the high temperature water amount stored in the hot water storage tank 9 of the storage-type electric water heater 7 is greater than or equal to the requested water-heating hot water amount (step S39A). If the high temperature water amount is less than the requested water-heating hot water amount, the HEMS controller 4 acquires from the power meter 3 data of the purchased-power amount occurring in the prescribed time period (step S40), and calculates the data of the purchased-power fee by multiplying the acquired purchased-power amount by the purchase power amount unit price (step S41). The purchased-power fee data is compared with the standard monetary amount (step S42), and if the purchased-power fee data exceeds the standard monetary amount, the HEMS controller 4 instructs the storage-type electric water heater 7 to stop the water heating operation, suppresses the increase in the purchased power outlay by maintaining this state for the prescribed time period (step S43A), and then returns to step S36. Thereafter, when the water heating end time is not reached, as long as the sold-power amount exceeds the prescribed value, the water heating operation of the storage-type electric water heater 7 restarts. If the purchased-power fee data is less than or equal to the standard monetary amount in step S42, determination is made as to whether the water heating operation end time is reached (step S44), and if the water heating operation end time is not reached, processing returns to step S38A, and the storage-type electric water heater 7 is allowed to continue the water heating operation. If the water heating end time is reached in step S44, or if the high temperature water amount stored in the hot water storage tank 9 is greater than or equal to the requested water-heating hot water amount in step S39A, the HEMS controller 4 gives an instruction to stop the water heating operation (step S45) and ends the daytime power time slot water heating control.

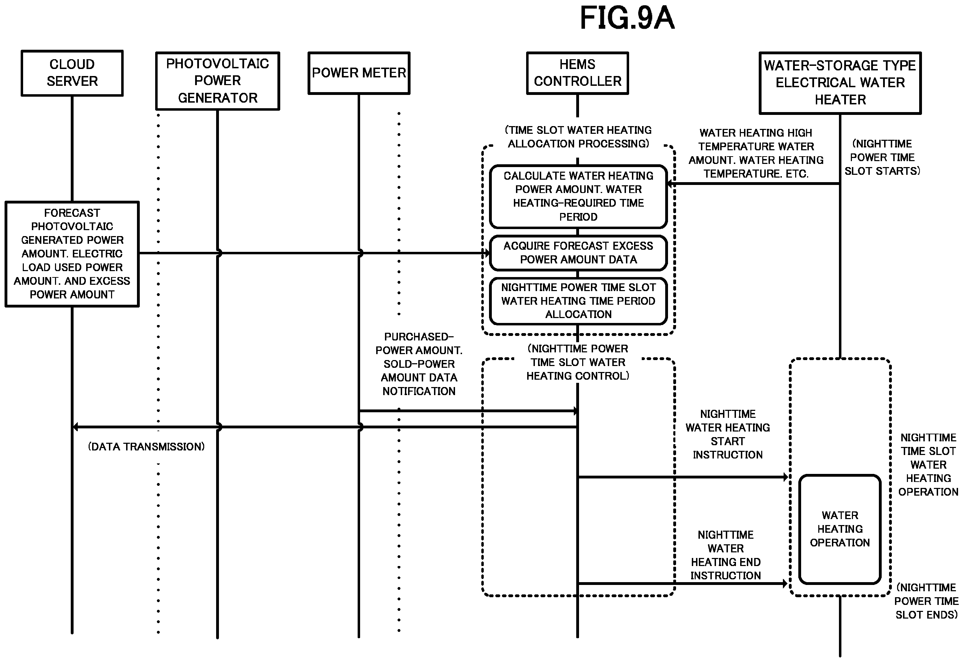

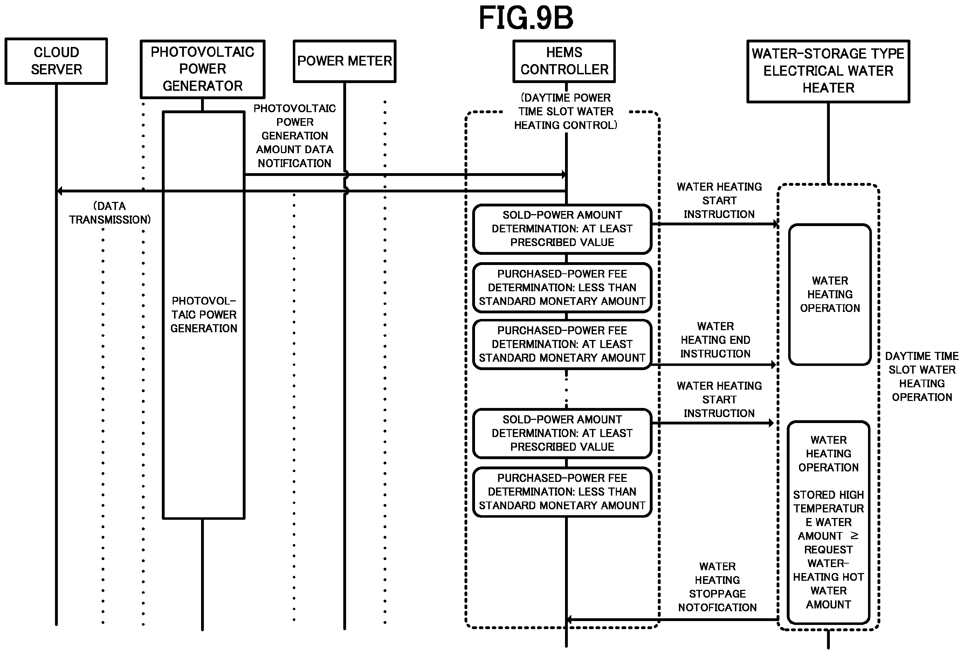

Next, FIGS. 9A and 9B illustrate time charts of a one-day cycle of an example of operations and communication data occurring in the HEMS controller 4, the photovoltaic power generator 1, the storage-type electric water heater 7, the cloud server 12, and the power meter 3 in the water heater control system according to the present embodiment. In the daytime power time slot water heating control of the HEMS controller 4, if the sold-power amount is greater than or equal to a prescribed value, the HEMS controller 4 transmits to the storage-type electric water heater 7 an instruction to start water heating. The HEMS controller 4 determines the purchased-power fee during the water heating operation of the storage-type electric water heater 7, and maintains the water heating operation if the purchased-power fee is less than or equal to the standard monetary amount. However, if the purchased-power fee exceeds the standard monetary amount, the HEMS controller 4 transmits to the storage-type electric water heater 7 a water heating stop instruction. Thereafter, when the sold-power amount is greater than or equal to the prescribed value, the HEMS controller 4 instructs the storage-type electric water heater 7 to restart the water heating operation. When the high temperature water stored in the hot water storage tank 9 is greater than or equal to the request water-heating hot water amount, the storage-type electric water heater 7 stops the water heating operation and transmits to the HEMS controller 4 notification of water heating stoppage.

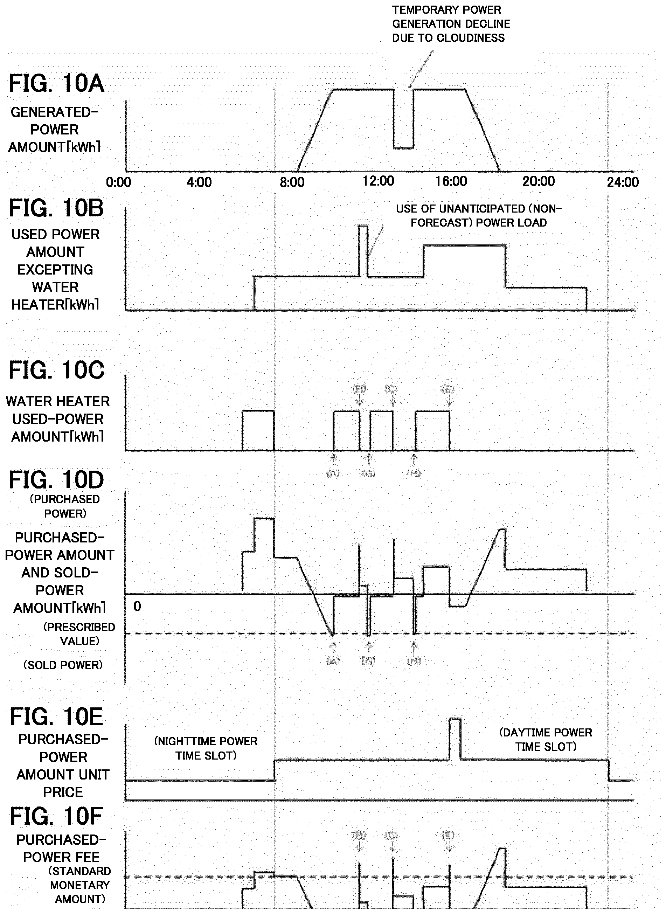

Next, FIG. 10A is a time chart illustrating at each prescribed time period an example of daily fluctuations in a generated-power amount of a photovoltaic power generator 1 in the water heater control system according to the present embodiment, FIG. 10B is a time chart illustrating at each prescribed time period an example of daily fluctuations in the used power amount of the electrical load circuit 8 except for the storage-type electric water heater 7 in the present embodiment, FIG. 10C is a time chart illustrating at each prescribed time period an example of daily fluctuations in the used power amount of the storage-type electric water heater 7 in the present embodiment, FIG. 10D is a time chart illustrating at each prescribed time period an example of daily fluctuations in the purchased-power amount supplied from the commercial power supply and the sold-power amount for power flowing back to the commercial power supply detected by a power meter 3 in the present embodiment, FIG. 10E is a time chart illustrating at each prescribed time period an example of daily fluctuations in the purchased power amount unit price in the present embodiment, and FIG. 10F is a time chart illustrating at each prescribed time period an example of daily fluctuations in the purchased-power fee in the present embodiment. "(A)", "(G)", and "(H)" shown in FIG. 7D are points in time when the sold-power amount (excess power amount) in the daytime power time slot first becomes greater than or equal to a prescribed value, and thus are when the HEMS controller 4 instructs the storage-type electric water heater 7 to start the water heating operation. "(B)", "(C)", and "(E)" indicated in FIG. 10F are points in time when the purchased-power fee during the water heating operation of the storage-type electric water heater 7 occurring in the daytime power time slot becomes greater than or equal to the standard monetary amount so that the HEMS controller 4 instructs the storage-type electric water heater 7 to stop the water heating operation. Due to the used-power increase of the electrical load circuit except for the storage-type electric water heater at the point in time "(B)", and due to a decrease in power generated by the photovoltaic power generator due to the effect of clouds and the like at the point in time "(C)", the purchased-power amount purchased from the commercial power supply increases and thus the purchased-power fee exceeds the standard monetary amount. Further, due to an increase in the purchase power amount unit price at the point in time "(E)", the purchased-power fee exceeds the standard monetary amount, and operation of the storage-type electric water heater is stopped.

In accordance with the water heater control system according to the present embodiment in the aforementioned manner, when water heating of the storage-type electric water heater is performed by excess power by the power generated by the photovoltaic power generator, in the case in which the purchased-power fee becomes greater than or equal to the standard monetary amount due to the excess power shortfall becoming large due to temporary cloudiness and the like, or in the case in which the purchase power amount unit price increases so that the purchased-power fee becomes greater than or equal to the standard monetary amount, the water heating operation of the storage-type electric water heater stops, and thus the increase in the purchased power outlay can be suppressed. Further, due to starting of the water heating operation of the storage-type electric water heater when the power amount sold to the commercial power supply is greater than or equal to a prescribed value, elimination of the excess power shortfall due to temporary cloudiness and the like is reliably detected, and thus effective use of the excess power generated by power generation by the photovoltaic power generator is enabled while suppressing the increase in the purchased power outlay.

### Embodiment 3

Although the HEMS controller 4 that is the control device of the water heater control system according to Embodiment 1 and Embodiment 2 performs ON-OFF selective control by causing execution or stoppage of the water heating operation of the storage-type electric water heater 7, in the case in which the power used in the water heating operation of the storage-type electric water heater 7 is variable, that is, in the case in which the power used in the water heating operation of the storage-type electric water heater 7 can be varied, for example, by varying a drive frequency of the heat pump 10 that is the heating unit to adjust heat exchange output, the used power may be adjusted by controlling the water heating operation of the storage-type electric water heater 7 in accordance with a magnitude of the excess power. The configuration of the water heater control system according to the Embodiment 3 is similar to that of the water heater control system according to Embodiment 1illustrated in FIG.1, and drawings and descriptions concerning such configuration are omitted below. Further, the flowchart of overall processing of water heater control with respect to the storage-type electric water heater and the flowchart of nighttime power time slot water heater control by the HEMS controller of the water heater control system according to the present embodiment are similar to the flowcharts for the HEMS controller of the water heater control system according to Embodiment 1 which are illustrated in FIG. 2 to FIG. 4, and drawings and descriptions of such control flowcharts are omitted below.

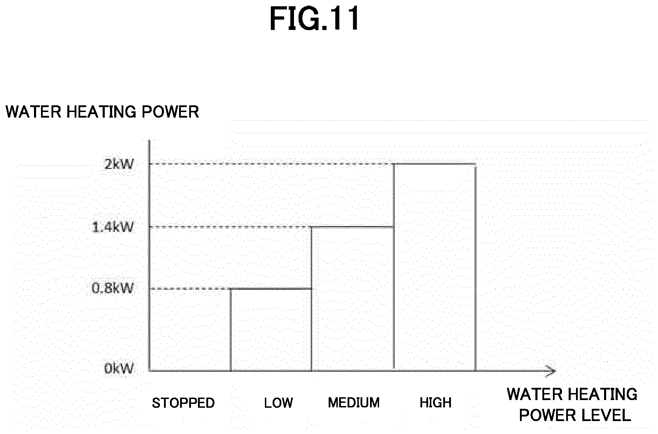

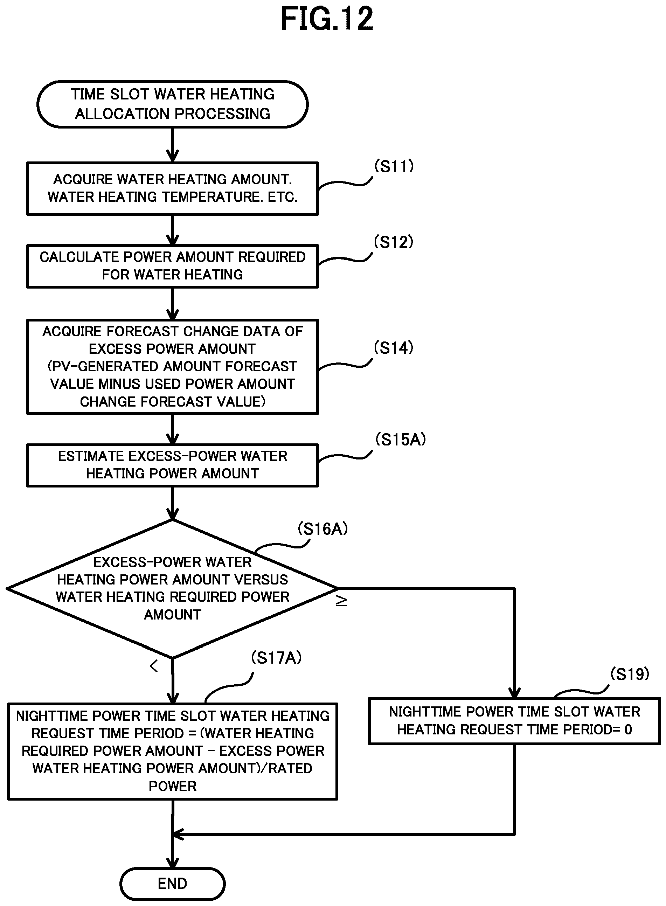

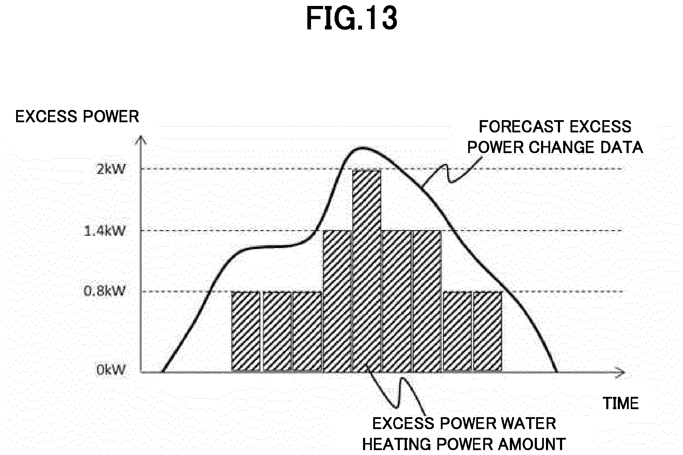

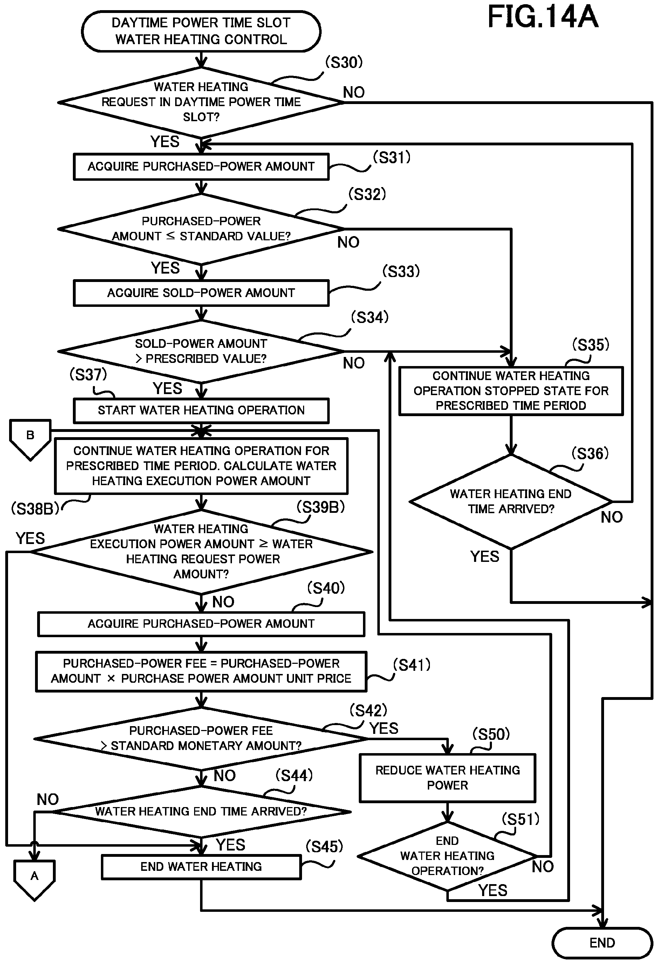

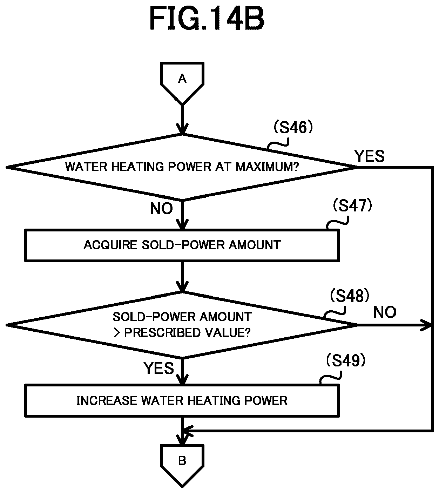

FIG. 11 is a chart illustrating power levels of the water heating operation occurring in the storage-type electric hot water heater 7 of the water heater control system according to the present embodiment; FIG. 12 is a flowchart of time slot water heating allocation processing (step S2) occurring in a HEMS controller 4 of the water heater control system according to the present embodiment; FIG. 13 is a chart for description of the excess-power water heating power amount; and FIG. 14 is a flowchart of daytime power time slot water heating control (step S4) occurring in the HEMS controller 4 of the water heater control system according to the present embodiment. Further, in FIG. 12 reference symbols are assigned that are the same as those of FIG. 3 for processing that is identical or equivalent to the processing illustrated in FIG. 3 and occurring in Embodiment 1, and in FIG. 14 reference symbols are assigned that are the same as those of FIG. 5 for processing that is identical or equivalent to the processing illustrated in FIG. 5 and occurring in Embodiment 1. The power used by the storage-type electric water heater 7 in the water heater control system according to the present embodiment is variable (3 steps) as illustrated in FIG. 11, and the water heating operation of the storage-type electric water heater 7 is controlled using a plurality of steps of power level in accordance with the excess power that is the generated power of the photovoltaic power generator 1 minus the power used by the electrical load circuit 8 except for the storage-type electric water heater.

The time slot water heating allocation processing of the HEMS controller 4 according to the present embodiment is described next with reference to FIG. 12. In the flowchart, data such as the water-heating high temperature water amount and the water heating temperature is firstly obtained from the storage-type electric water heater 7 (step S11), and the power amount required for water heating is calculated (step S12). Thereafter, the internet and the like is used to access the cloud server 12, and the forecast change data is obtained for the excess power amount (power amount obtained by subtracting the used power amount of the electrical load circuit 8 except for the storage-type electric water heater from the photovoltaic power amount) due to generated power of the photovoltaic power generator 1 for the following day (step S14). Thereafter, the forecast value of the excess power and the water heating power (0.8 kW, 1.4 kW, or 2.0 kW) of the storage-type electric water heater 7 of FIG. 11 are compared, and the excess-power water heating power amount is estimated (step S15A). The estimation of the excess-power water heating power amount is performed by comparing a minimum value for each prescribed time period of the change data of the excess power amount forecast as illustrated in FIG. 13 with a prescribed water heating power (0.8 kW, 1.4 kW, or 2.0 kW), determining the power that enables water heating using the forecast excess power in each prescribed time period, and integrating such power values (surface area of the tilted-line portions of FIG. 13). Then the estimated excess-power water heating power amount and the power amount required for water heating are compared (step S16A), and if the excess-power water heating power amount is less than the power amount required for water heating, the water heating request time period of the nighttime power time slot is allocated as a value obtained by subtracting the excess-power water heating power amount from the power amount required for water heating and then dividing by the rated power (such as 2 kW) of the storage-type electric water heater. If the excess-power water heating power amount is more than or equal to the power amount required for water heating in step S16A, then the water heating request time period of the nighttime power time slot is set to 0, and all the water heating request power amount is allocated to the daytime power time slot (step S19).

Next, water heating control occurring in the daytime power time slot of the HEMS controller 4 according to the present embodiment is described with reference to FIGS. 14A and 14B. In these flowcharts, firstly the HEMS controller 4 determines whether a water heating request in the daytime power time slot occurs (step S30), and if no water heating request occurs, then the HEMS controller 4 ends the processing of the daytime power time slot water heating control. If there is occurrence of the water heating request, the HEMS controller 4 acquires the purchased-power amount detected by the power meter 3 (step S31), and determines whether the acquired value is less than or equal to a standard value (step S32). If the purchased-power amount is less than or equal to the standard value, the HEMS controller 4 acquires the sold-power amount detected by the power meter 3 (step S33), and the HEMS controller 4 determines whether the value of the sold-power amount exceeds a prescribed value (step S34). If the purchased-power amount in step S32 exceeds the standard value, or if the sold-power amount in step S34 is less than or equal to the prescribed value, the stopped state of the water heating operation of the storage-type electric water heater 7 continues for a prescribed time period (step S35), and then the HEMS controller 4 determines whether the time at that point reaches the water heating operation end time (step S36). If the result of the determination is that the water heating operation end time is reached, then the HEMS controller 4 ends the daytime power time slot water heating control, if the determination is that the water heating operation end time is pending, the HEMS controller 4 returns to step S31.

If the sold-power amount in step S34 exceeds the prescribed value, the HEMS controller 4 instructs the storage-type electric water heater 7 to start the water heating operation (step S37), and thereafter, the HEMS controller 4 causes continuation of the water heating operation for a prescribed time period, also acquires from the storage-type electric water heater 7 the power amount of this water heating operation, integrates the acquired power amount as the water heating execution power amount (step S38B), and determines whether this water heating execution power amount is greater than or equal to the water heating request power amount (step S39B). In the case in which the water heating execution power amount is less than the water heating request power amount, the HEMS controller 4 acquires from the power meter 3 data of the purchase-power amount occurring in the prescribed time period (step S40), and calculates data of the purchased-power fee by multiplying this purchased-power amount data by the purchase power amount unit price (step S41). Then the standard monetary amount and the calculated purchased-power fee data are compared (step S42), and if the purchased-power fee data exceeds the standard monetary amount, the purchased-power fee is increased due to the power used in the water heating operation of the storage-type electric water heater 7, and thus the HEMS controller 4 sends to the storage-type electric water heater 7 an instruction to cause a decrease in the water heating power (step S50). Although this causes the storage-type electric water heater 7 to decrease the water heating power, the water heating operation stops if the water heating power is less than or equal to a lower limit. The HEMS controller 4 determines whether the water heating operation of the storage-type electric water heater 7 is stopped (step S51), the HEMS controller 4 returns to step S38B if the water heating operation is continuing, or if the water heating operation is stopped, the HEMS controller 4 returns to the step S35.

If the purchased-power fee data in step S42 is less than or equal to the standard monetary amount, the excess power occurring due to the generated power of the photovoltaic power generator 1 can be used effectively in the water heating operation of the storage-type electric water heater 7 without causing the generation of a large purchased-power fee. The HEMS controller 4 determines whether at this point in time there is arrival of the water heating operation end time (step S44), and if the water heating operation end time is pending, then the HEMS controller 4 determines whether the water heating power of the storage-type electric water heater 7 is in the maximum state (step S46). If the water heating power is not in the maximum state, the HEMS controller 4 acquires from the power meter 3 the data of the sold-power amount (step S47), compares the acquired data with a prescribed value (for example, 600 W × a prescribed time period) (step S48), and if the sold-power amount is larger than the prescribed value, margin exists in the excess power, and thus the HEMS controller 4 transmits an instruction to the storage-type electric water heater 7 to cause an increase in the water heating power, and then the HEMS controller 4 returns to step S38B. If the water heating power of the storage-type electric water heater 7 in step S46 is already at the maximum, or if the sold-power amount in step S48 is less than or equal to the prescribed amount, the HEMS controller 4 goes to step S38B without changing the water heating power of the storage-type electric water heater 7 and allows continuation of the water heating operation. However, if the water heating end time is reached in step S44, or if the water heating execution power amount in step S39B reaches the water heating request power amount, the HEMS controller 4 gives an instruction to stop the water heating operation (step S45) and ends the daytime power time slot water heating control.

Further, the increase of water heating power occurring in step S49 or the decrease of the water heating power amount occurring in step S50 may vary in a step-wise manner the power level used in the water heating operation of the storage-type electric water heater 7 illustrated in FIG. 11, and the power level used in the water heating operation of the storage-type electric water heater 7 may be varied in a multi-step manner in accordance with the size of the sold-power amount or the purchased-power fee. Further, the increase and the decrease in the adjustment of the used power amount of the storage-type electric water heater 7 may differ from each other, as in the case in which the increase amount of the power level used in the water heating operation is by 1 step, and the decrease amount of the power level is by 3 steps.

In the water heater control system according to the present embodiment, the water heater power of the storage-type electric water heater 7 is controlled so as to decrease when the purchased-power fee exceeds the prescribed monetary amount, and thus the increase of the purchased-power fee of the storage-type electric water heater 7 can be suppressed. Furthermore, the water heating power of the storage-type electric water heater 7 can have a plurality of power levels, thus even when the excess power is less than or equal to the water heating rated power of the storage-type electric water heater, the excess power can be used in a state in which the occurrence of purchased power is suppressed.

Embodiment 4 (controlled or stopped in accordance with purchased-power amount, not controlled or stopped in accordance with time slot)

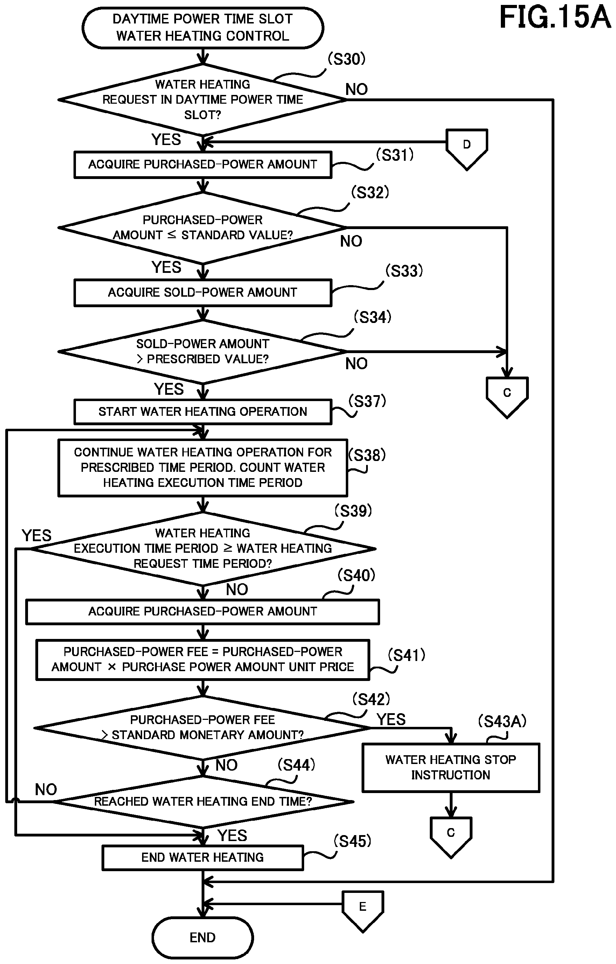

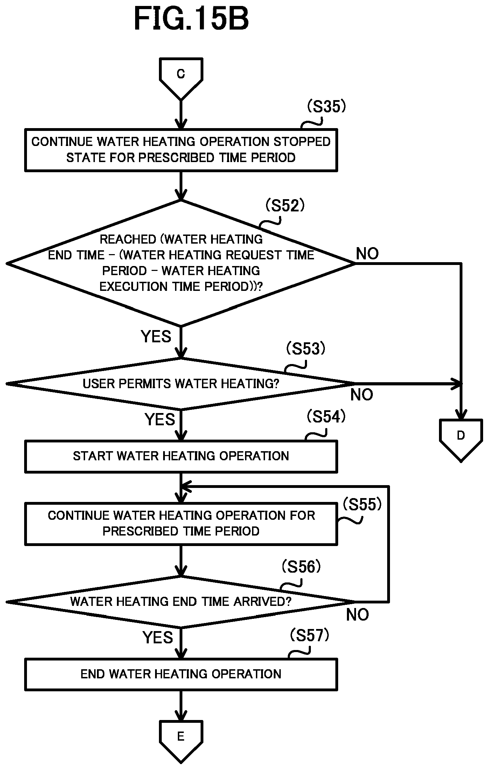

FIGS. 15A and 15B are flowcharts of the water heating control occurring in the daytime power time slot and performed with respect to the storage-type electric water heater 7 by the HEMS controller 4 that is the control device of the water heater control system according to Embodiment 4. In the ending of the water heating of the storage-type electric water heater 7, the HEMS controller 4 of the present embodiment compares a time remaining until a requested end time (water heating end time) and a required remaining water heating-required time period (or a remaining water heating-required time period + α, α being a margin time period) until the end of water heating, and if the time remaining until the water heating end time is determined to be less than the remaining water heating-required time period (equal to the water heating-required time period minus the water heating execution time period), continues the water heating operation by the storage-type electric water heater 7 until the water heating end time or until completion of the water heating, regardless of the value of the purchased-power fee. Further, the water heater control system according to the present embodiment is configured in a manner similar to the water heater control system of FIG. 1 according to Embodiment 1. Further, the overall processing of the water heating control with respect to the storage-type electric water heater 7, the time slot water heating allocation processing, and the nighttime power time slot water heating control processing by the HEMS controller 4 of the water heater control system according to the present embodiment are similar to the overall processing of the water heater control with respect to the storage-type electric water heater 7, the time slot water heating allocation processing, and the nighttime power time slot water heating control processing by the HEMS controller of the water heater control system according to Embodiment 1 illustrated in the FIG. 2 to FIG. 4 flowcharts.

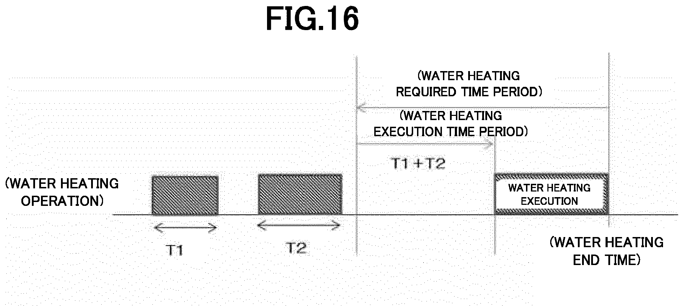

Processing in FIGS. 15A and 15B that is the same or equivalent to the processing illustrated in FIG. 5 as occurring in Embodiment 1 or in FIG. 8 as occurring in Embodiment 2 is assigned the same reference symbols as in FIG. 5 or FIG. 8, description of such processing is omitted, and the processing of step S52 to step S57 is described. In the case in which the purchased-power amount in step S32 exceeds the standard value, the sold-power amount in step S34 is less than or equal to the prescribed value, or the purchased-power fee during the water heating operation of the storage-type electric water heater 7 exceeds the standard monetary amount so that the water heating operation is stopped for the prescribed time period in step S43A, the HEMS controller 4 determines whether at this point in time there is arrival at a time obtained by subtracting from the water heating end time a difference obtained by subtracting the water heating execution time period from the water heating request time period (step S52). The difference (the water heating request time period minus the water heating execution time period) is the required remaining water heating operation time until the storage-type electric water heater finishes the water heating; and in the case in which the time (the water heating end time minus the difference, the difference being the water heating request time period minus the water heating execution time period) reaches the time to end the water heating by the water heating end time, the HEMS controller 4 checks whether the user permits the storage-type electric water heater to perform the water heating operation even when the purchased-power fee increases (step S53). In the case in which the time in step S52 does not arrive yet at the water heating end time minus the difference, the difference being the water heating request time period minus the water heating execution time period, or if there is no permission by the user in step S53 for water heating, the HEMS controller 4 returns to step S31 and checks the purchased-power amount and the sold-power amount detected by the power meter 3. If permission for water heating exists in step S53, the HEMS controller 4 instructs the storage-type electric water heater 7 to start the water heating operation (step S54). Thereafter, the HEMS controller 4 allows the water heating operation to continue for a prescribed time period (step S55), and then determines whether there is arrival of the water heating end time (step S56). If the water heating end time is pending, the HEMS controller 4 returns to step S55 and continues the water heating operation, of if there is arrival of the water heating end time, the HEMS controller 4 gives an instruction for stoppage of the water heating operation (step S57) and ends the water heating control occurring in the daytime power time slot. The water heating operation of the storage-type electric water heater continues, regardless of the purchased-power fee, during the execution of step S54 to step S56, that is during the time period until the water heating end time from prior to the water heating end time minus the difference, the difference being the water heating request time period minus the water heating execution time period. FIG. 16 illustrates relationships between the water heating end time and the water heating request time period and between the water heating execution time period and the water heating operation.

According to the water heater control system of the present embodiment, the photovoltaic power is effectively used, and water heating of the storage-type electric water heater is performed, and in the case in which the purchased-power fee exceeds the standard monetary amount due to the increase of the purchased-power amount due to the decrease in the generated-power amount by temporary cloudiness, due to the increase in purchased-power fee caused by the increase in the consumed power amount due to use of other electric equipment and the like, or due to the increase in the purchase power amount unit price caused by a power supply-demand situation, the water heating operation of the storage-type electric water heater is controlled or stopped, and thus the increase in the purchased-power fee is suppressed, and when the remaining time until the water heating end time becomes less than or equal to the water heating-required time period, regardless of the purchased-power fee, the water heating operation of the storage-type electric water heater continues on the basis of approval by the user, and the required high temperature water amount can be secured.

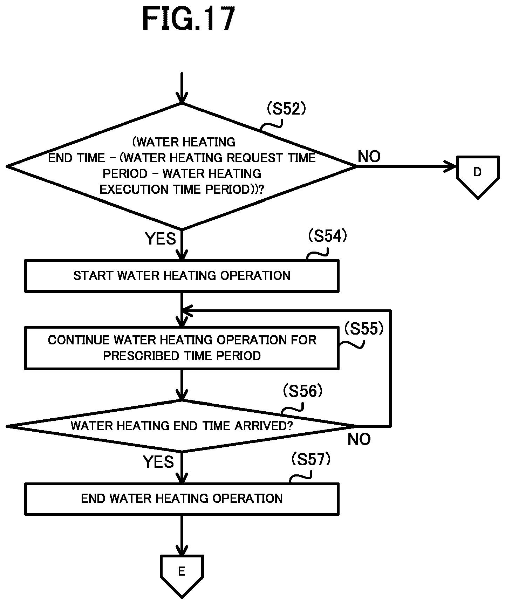

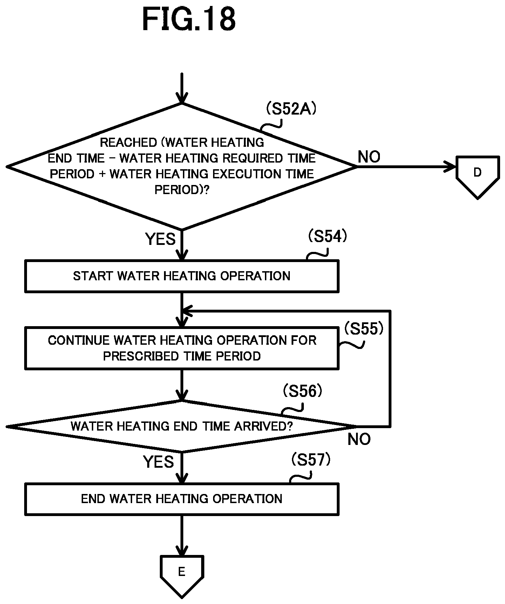

Further, according to the water heater control system of the present embodiment, in the water heating control by the HEMS controller 4 in the daytime power time slot, when the time reaches the water heating end time minus the difference (the difference being the water heating request time period minus the water heating execution time period) in step S52, the check is performed in step S53 to find whether the user permits execution of the water heater operation regardless of the purchased-power fee. However, the processing of step S53 may be omitted, and the water heating operation may be performed regardless of the purchased-power fee (see FIG. 17). Although the determination in step S52 is performed using the water heating request time period required for water heating of the high temperature water amount requested for water heating, a required high temperature water amount, for securing a lower limit that is less than a high temperature water amount (requested high temperature water amount) requested for water heating, may be determined, and a determination such as in step S52A may be made using a water heating-required time period necessary for water heating of the required high temperature water amount that is shorter than the water heating request time period (see FIG. 18).

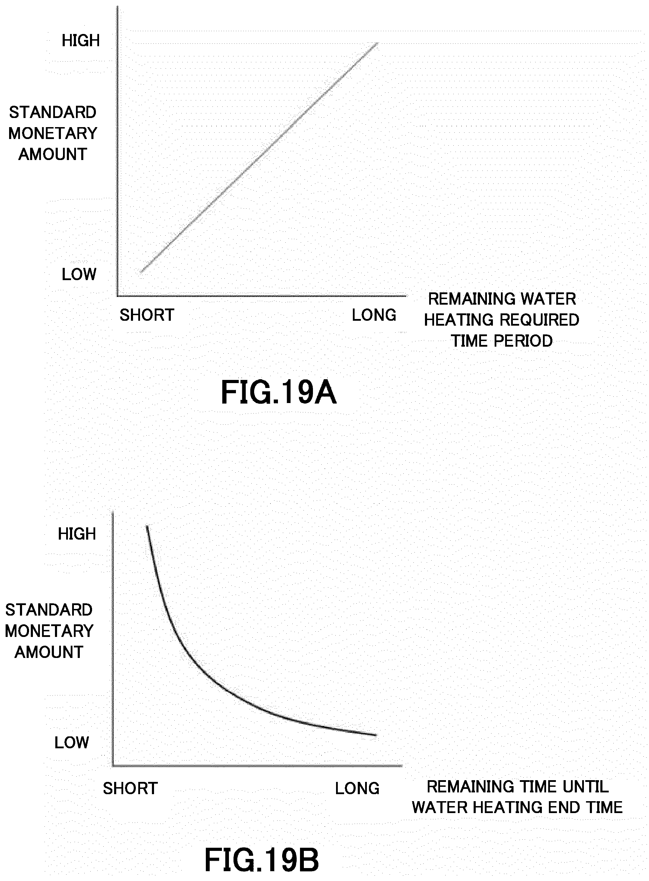

Further, according to the water heater control system of the present embodiment, in the water heating control of the daytime power slot by the HEMS controller 4 as indicated by step S42 of FIG. 15A, although the standard monetary amount and the purchased-power fee of the prescribed time period are compared, and the HEMS controller 4 determines whether to stop the water heating operation of the storage-type electric water heater 7, alternatively, the standard monetary amount may be adjusted in accordance with a "remaining water heating-required time period" or a "remaining time until the water heating end time". The expression "remaining water heating-required time period" means the water heating-required time period that remains as calculated by subtracting the executed water heating time from the water heating time period required for water heating of the requested high temperature water amount. For example, assuming that the "standard monetary amount" is equal to "an initial standard monetary amount" times "the remaining water heating-required time period" divided by "the time period remaining until the water heating end time" (or the "standard monetary amount" is equal to the "initial standard monetary amount" times the "remaining water heating-required time period" divided by the "time period remaining until the water heating end time minus the remaining water heating-required time period"), when the "remaining water heating-required time period" is long, the standard monetary amount is increased, the continued fraction of the water heating operation is increased, and water heating is promoted. If the "remaining water heating-required time period" becomes shorter, the standard monetary amount is reduced, and the increase in the purchased power outlay is greatly suppressed, and also if the "remaining time until the water heating end time" is shortened, the standard monetary amount is increased, and the water heating operation is promoted. Examples of the relationship between the standard monetary amount and the remaining water heating-required time period and the relationship between the standard monetary amount and the time remaining until the water heating end time are illustrated in FIGS. 19A and FIG 19B.

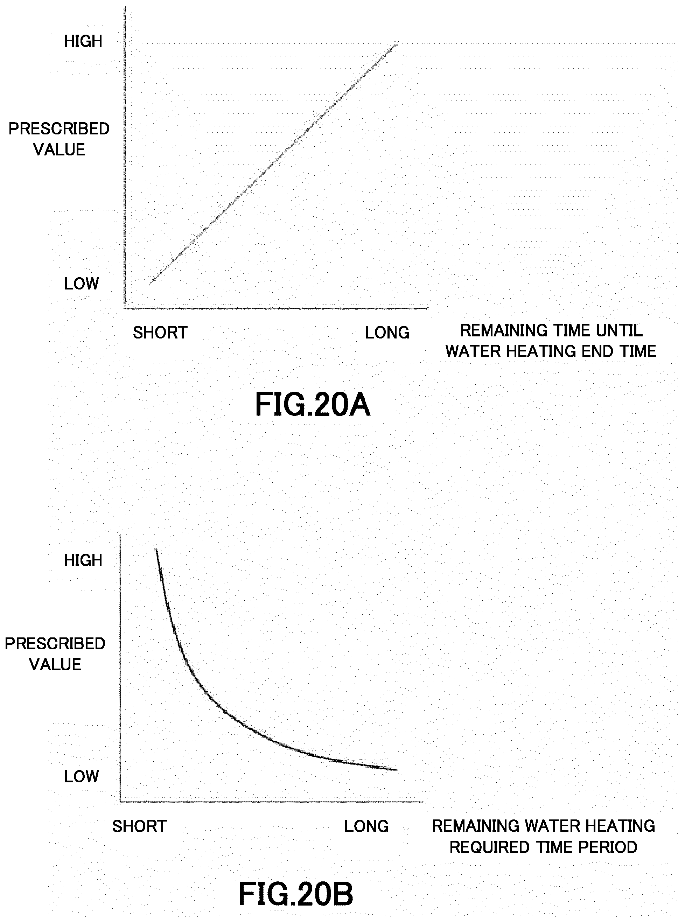

Although the prescribed time period sold-power amount is compared to the prescribed value and determination is made as to whether to start the water heating operation of the storage-type electric water heater as illustrated in step S34 of FIG. 15A, this prescribed value also may be adjusted in accordance with the "remaining water heating-required time period" or the "time remaining until the water heating end time". For example, the prescribed value may be assumed to be equal to "an initial prescribed value" times the "time remaining until the water heating end time" divided by the "remaining water heating-required time period" (or the prescribed value is equal to "the initial source prescribed value" times the "time remaining until the water heating end time minus the remaining water heating-required time period" divided by the "remaining water heating-required time period"), and when the "remaining water heating-required time period" becomes longer or the "time period remaining until the water heating end time" becomes shorter, the prescribed value may be reduced, the likelihood of starting of the water heating operation may be increased, and water heating may be promoted. An example of the relationships between the prescribed value and the remaining water heating-required time period and between the standard monetary amount and the time remaining until the water heating end time is illustrated in FIGS. 20A and 20B.

The shortfall of the water heating high temperature water can be recovered, while suppressing the purchased-power fee, by adjusting the standard monetary amount in comparison to the purchased-power fee, by adjustment of the prescribed value in comparison to the sold-power amount, by adjustment of the remaining time until the water heating end time, by adjustment of the remaining water heating-required time period, and the like, as illustrated in FIGS. 19A,19B, 20A and 20B.

### Embodiment 5

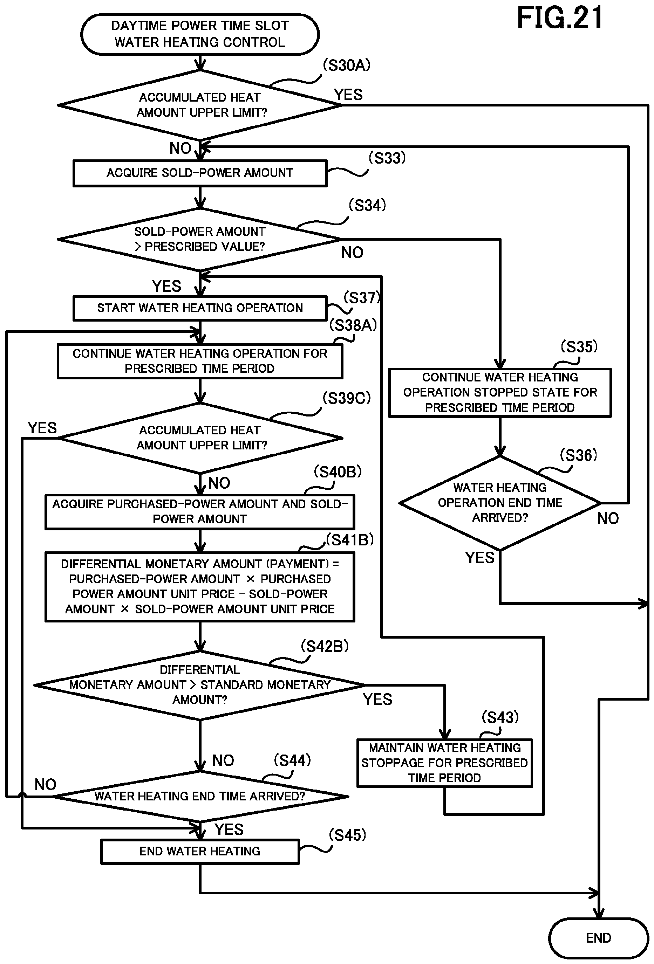

Although the HEMS controller 4 of the water heater control system according to Embodiment 1 to Embodiment 4 performs control so as to limit the water heating operation of the storage-type electric water heater 7 on the basis of the purchased-power fee, thereby attempting to suppress the increase in the purchased-power fee,

by basing the standard monetary amount of a differential monetary amount between the purchased-power fee of power from a commercial power supply and a sold-power electric utility rate for sales to the commercial power supply, the water heating operation of the storage-type electric water heater 7 may be limited by control, thereby attempting to suppress the increase in the differential monetary amount. FIG. 21 illustrates a flowchart of water heating control occurring in the daytime power time slot and performed with respect to the storage-type electric water heater 7 by the HEMS controller 4 that is the control device of the water heater control system according to Embodiment 5. Further, reference symbols are assigned that are the same for processing that is identical or equivalent to the processing illustrated in FIG. 5 that is the flowchart of water heating control occurring in the daytime power slot and performed with respect to the storage-type electric water heater 7 by the HEMS controller 4 of the water heater control system according to Embodiment 1. The HEMS controller 4 of the water heater control system according to the present embodiment, in the daytime power time slot, compares the standard monetary amount with the differential monetary amount between the purchased-power fee of power from the commercial power supply and the sold-power fee for selling to the commercial power supply, and when this differential monetary amount is larger than the standard monetary amount, the HEMS controller 4 suppresses or stops the water heating operation of the storage-type electric water heater 7, thereby suppressing the increase in this differential monetary amount. Such operation is described below with reference to FIG. 21.

In FIG. 21, the HEMS controller 4 firstly checks whether an accumulated heat amount occurring in the hot water storage tank 9 of the storage-type electric water heater 7 is at an upper limit (whether the hot water storage tank is full of high temperature water heated to an upper limit temperature) (step S30A), and ends the processing of the daytime power time slot water heating control if the accumulated heat amount is at the upper limit. If the accumulated heat amount is not at the upper limit, the HEMS controller 4 acquires the sold-power amount detected by the power meter 3 (step S33) and determines whether the acquired sold-power amount exceeds a prescribed value (step S34). If the sold-power amount is less than or equal to the prescribed value, the stopped state of the water heating operation of the storage-type electric water heater 7 continues for a prescribed time period (step S35), and thereafter, the HEMS controller 4 determines whether at this point in time there is arrival of the water heating operation end time (step S36). If the result of the determination is that the water heating operation end time is reached, the HEMS controller 4 ends the daytime power time slot water heating control, and if the water heating operation end time is pending, the HEMS controller 4 returns to step S33.

If the sold-power amount in step S34 exceeds the prescribed value, the HEMS controller 4 instructs the storage-type electric water heater 7 to start the water heating operation (step S37), and the water heating operation thereafter continues for a prescribed time period (step S38A). Thereafter, the HEMS controller 4 checks whether the accumulated heat amount in the hot water storage tank 9 of the storage-type electric water heater 7 is at an upper limit (whether the hot water storage tank is full of high temperature water heated to the upper limit temperature) (step S39C), and if the accumulated heat amount is not at the upper limit, the HEMS controller 4 acquires the purchased-power amount and the sold-power amount data from the power meter 3 (step S40B), and from the purchased-power fee obtained by multiplying the purchased-power amount data by the purchase power amount unit price, calculates data of a differential monetary amount (payment) data by subtracting from the purchased-power fee the sold-power fee obtained by multiplying the sold-power amount data by a sold-power amount unit price (step S41B). This differential monetary amount and the standard monetary amount are compared (step S42B), and if the differential monetary amount data exceeds the standard monetary amount, the HEMS controller 4 instructs the storage-type electric water heater 7 to end the water heating operation, maintains the stopped state for a prescribed time period to thereby suppress the increase in the purchased-power amount and thus the increase in the purchased power outlay (step S43), and returns to step S37. If the differential monetary amount data in step S42B is less than or equal to the standard monetary amount, the HEMS controller 4 determines whether at this point in time there is arrival of the water heating operation end time (step S44), and if the water heating operation end time is pending, returns to step S38A, and causes the storage-type electric water heater 7 to continue the water heating operation. If the water heating end time in step S44 is reached, or if the water heating execution time period in step S39C reaches the water heating request time period, the HEMS controller 4 gives an instruction to end the water heating operation (step S45), and ends the daytime power time slot water heating control.

The water heater control system according to the present embodiment can accumulate heat by effectively using photovoltaic power by starting the water heating operation of the storage-type electric water heater 7 when the excess power amount due to power generated by the photovoltaic power generator 1 (sold-power amount) exceeds the prescribed value. Further, when the commercial power supply electricity utility rate of the purchased power during the water heating operation of the storage-type electric water heater 1 increases, the differential monetary amount also increases, and when the differential monetary amount exceeds the standard monetary amount, the water heating operation of the storage-type electric water heater 7 stops so that the increase in the purchased power outlay can be suppressed. Even when the purchased-power fee is large by a certain degree, the sold-power fee is high, and the difference between the purchased-power fee and the sold-power fee is smaller than the standard monetary amount, the excess power due to the power generated by the photovoltaic power generator is large overall, and even if the power amount used by the storage-type electric water heater 7 is maintained, there is a low possibility of a major increase in the purchased-power fee due to some change in the used power amount occurring in the electrical load circuit 2 and the power generation amount from the photovoltaic power generator 1, and the generated power of the photovoltaic power generator 2 can be effectively used while suppressing the increase of the purchased power outlay.

Further, in the water heater control system according to the present embodiment, the determination to end the water heating of the storage-type electric water heater 7 is performed by the determination on the basis of detection of accumulation (accumulated heat amount upper limit) when the high temperature water of a prescribed temperature has at least a prescribed volume on the basis of temperature detection means such as multiple temperature sensors arranged in the hot water storage tank 9. However, as in the water heater control system according to Embodiment 1, the determination may be on the basis of whether the execution time period of the water heating operation of the storage-type electric water heater 7 reaches the water heating-required time period necessary for water heating of the requested high temperature water amount, or alternatively, as in the water heater control system according to Embodiment 3, the determination may be on the basis of whether the power of the water heating operation of the storage-type electric water heater 7 reaches the power amount required for water heating of the requested high temperature water amount.

### Embodiment 6

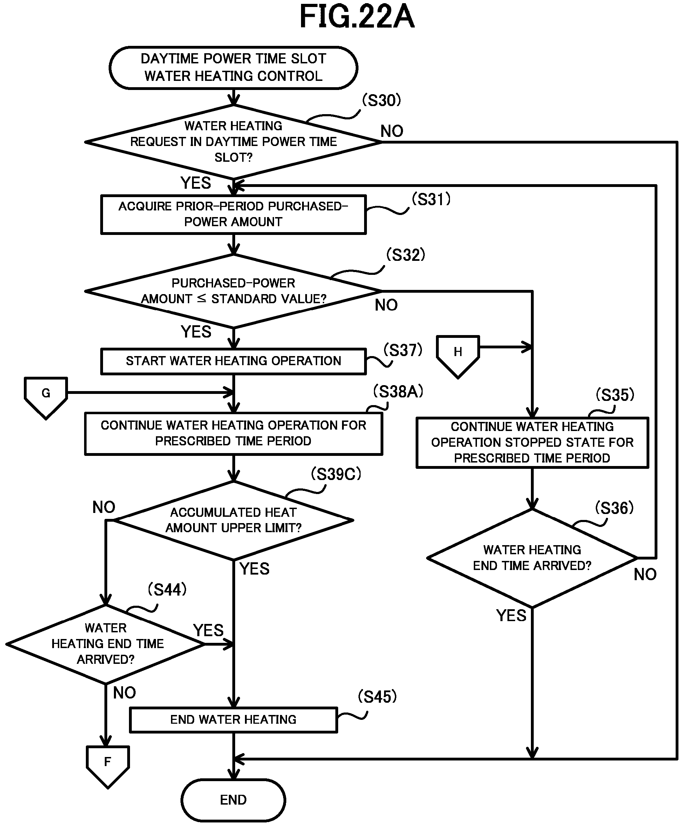

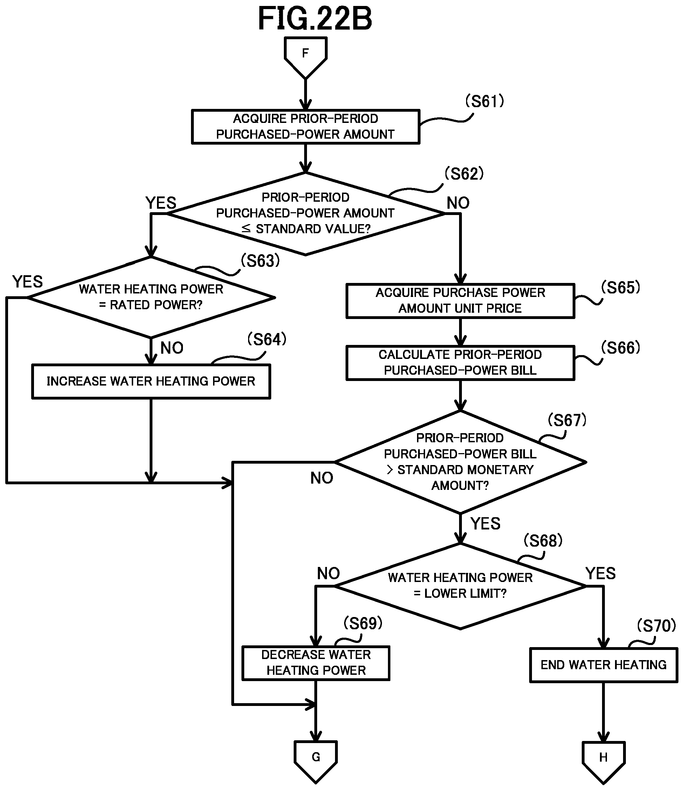

FIGS. 22A and 22B are flowcharts of water heating control occurring in the daytime power time slot of the HEMS controller 4 that is the control device of the water heater control system according to Embodiment 6 of the present disclosure. In the water heating control occurring in the daytime power time slot with respect to the storage-type electric water heater 7 by the HEMS controller 4 of the water heater control system according to the present embodiment, if the purchased-power amount is small, the HEMS controller 4 causes the power of the water heating operation of the storage-type electric water heater 7 to increase, and if the purchased-power fee is large, the HEMS controller 4 causes the power of the water heating operation of the storage-type electric water heater 7 to decrease. Further, the configuration of the water heater control system according to the present embodiment is similar to the configuration of FIG. 1 illustrating Embodiment 1, although the power meter 3 according to the present embodiment does not detect the sold-power amount and only detects the purchased-power amount. In the flowcharts, the water heating control overall processing, the time slot water heating allocation processing, and the nighttime power time slot water heating control processing with respect to the storage-type electric water heater 7 by the HEMS controller 4 of the water heater control system according to the present embodiment are similar to those of the water heating control overall processing, the time slot water heating allocation processing, and the nighttime power time slot water heating control processing with respect to the storage-type electric water heater 7 by the HEMS controller 4 of the water heater control system according to Embodiment 1 illustrated in FIG. 2 to FIG. 4. Control of the storage-type electric water heater 7 by the HEMS controller 4 of the water heater control system according to the present embodiment is described below with reference to FIGS. 22A and 22B. Further, processing that is the same or equivalent to the processing in FIG. 5 and FIG. 21, which are the flowcharts of the water heating control occurring in the daytime power time slot of the HEMS controller of the above-described water heater control systems according to Embodiment 1 and Embodiment 5, is assigned the same reference symbol.

In the flowchart in FIG. 22A, the HEMS controller 4 firstly determines, on the basis of data such as conditions occurring in the hot water storage tank 9 of the storage-type electric water heater 7, whether there is a request for the water heating operation occurring in the daytime power time slot (step S30), and the HEMS controller 4 ends the daytime power time slot water heating control if there is no request for water heating. If there is a water heating request, the HEMS controller 4 acquires data of the purchased-power amount from the power meter 3 (step S31), and determines whether the acquired purchased-power amount is less than or equal to a standard value (step S32). If the acquired purchased-power amount exceeds the standard value, the HEMS controller 4 continues the water heating stopped state for a prescribed time period (step S35), and determines whether the water heating end time is reached (step S36). If the water heating end time is not reached, the HEMS controller 4 returns to step S31, or if the water heating end time is reached, the HEMS controller 4 ends the daytime power time slot water heating control.

If the purchased-power amount in step S32 is less than or equal to the standard value, the HEMS controller 4 instructs the storage-type electric water heater 7 to start water heating (step S37), and thereafter, the HEMS controller 4 causes the storage-type electric water heater 7 to continue the water heating operation for a prescribed time period (step S38A). Thereafter, the HEMS controller 4 determines whether the accumulated heat amount occurring in the hot water storage tank 9 of the storage-type electric water heater 7 is greater than or equal to an upper limit (step S39C), and if the accumulated heat amount is not greater than or equal to the upper limit, the HEMS controller 4 determines whether the water heating end time is reached (step S44). If the accumulated heat amount of the hot water storage tank 9 is greater than or equal to the upper limit in step S39C, or if the water heating end time in step S44 is reached, the HEMS controller 4 instructs the storage-type electric water heater 7 to end the water heating operation (step S45), and then ends the daytime power time slot water heating control.

If the water heating end time is not reached in step S44, the HEMS controller 4 acquires data of the purchased-power amount from the power meter 3 (step S61), and determines whether this purchased-power amount is less than or equal to the standard value (step S62). If the result of the determination is that the purchased-power amount is less than or equal to the standard value, the HEMS controller 4 determines whether water heating power of the storage-type electric water heater 7 is a rated (maximum) power (step S63), and if the water heating power is not the rated power, the HEMS controller 4 causes an increase in the water heating power (step S64), and the HEMS controller 4 returns to step S38A. If the purchased-power amount in step S62 exceeds the standard value, the HEMS controller 4 acquires the purchase power amount unit price (step S65), multiplies the acquired purchase power amount unit price by the purchased-power amount to calculate the electric utility rate of the purchased power (step S66), and determines whether such power fee data exceeds the standard monetary amount (step S67). If the purchased-power fee data does not exceed the standard monetary amount, the HEMS controller 4 returns to step S38A, and the storage-type water heater 7 continues the water heating operation.

If the purchased-power fee in step S67 exceeds the standard monetary amount, the HEMS controller 4 determines whether the power of the water heating operation of the storage-type electric water heater 7 is a lower limit of the operation power (step S68), and if the power of the water heating operation is not the lower limit, the HEMS controller 4 instructs the storage-type electric water heater 7 to lower the water heating power (step S69), and the HEMS controller 4 goes to step S38A and continues the water heating operation. However, if the determination in step S68 is that the water heating power is at the lower limit, the HEMS controller 4 instructs the storage-type electric water heater 7 to end the water heating operation (step S70), and thereafter the HEMS controller 4 goes to step S35.

In accordance with the water heater control system according to the present embodiment in the aforementioned manner, when the purchased-power fee is greater than the standard monetary amount in the daytime power time slot that has the high purchase power amount unit price, the water heating power of the storage-type electric water heater is suppressed so that the increase of the purchase power outlay is suppressed. Also in the case in which the purchased-power amount is less than or equal to the standard value, the excess power is estimated to be sufficient, the water heating power of the storage-type electric water heater is increased, the power generated by the photovoltaic power generator is used, and the power generated by the photovoltaic power generator can thus be effectively used even when the sold-power amount data cannot be acquired.

### Embodiment 7

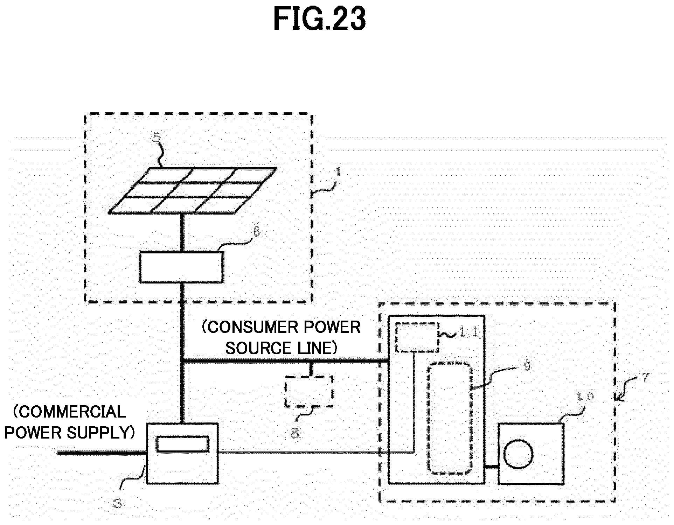

In the aforementioned water heater control system described in Embodiment 1 to Embodiment 6, although the HEMS controller (control device) outputs to the storage-type electric water heater a water heating start instruction at a water heating start time and outputs a water heating stop instruction at a water heating stoppage time, the controller of the storage-type electric water heater may determine the water heating start and the water heating stoppage. FIG. 23 is drawing illustrating a configuration of a storage-type electric water heater and peripheral equipment thereof according to Embodiment 7 of the present disclosure, and components that are the same as those in FIG. 1 illustrating Embodiment 1 or equivalent to those in FIG. 1 are assigned the same reference signs as those in FIG. 1. In the drawing, the storage-type electric water heater 7 is equipped with the hot water storage tank 9 for storing high temperature water and low temperature water, the heat pump 10 that is the heating unit for heating the low temperature water to become the high temperature water, and the controller 11 for performing overall control of the storage-type electric water heater 7, and is connected to the consumer power source line. Electrical equipment such as an air conditioner, TV, vacuum cleaner, rice cooker, and the like, as the other electrical load circuit 8, are connected to the consumer power source line to which the storage-type electric water heater 7 is connected. Further, the photovoltaic power generator 1 is equipped with the PV panel 5 and the power conditioner 6, and is also connected to the consumer power source line; and the direct current power generated by the PV panel 5 is converted to alternating current by the power conditioner 6 and is output to the consumer power source line. The consumer power source line is connected to the power line of the commercial power supply, and the power meter 3 is arranged at the interconnection point interconnecting the consumer power source line and the commercial power supply. The power meter 3 detects the amount of power exchanged between the commercial power supply power line and the consumer power source line, and sends notification of the power amount data to the controller 11 of the storage-type electric water heater 7 periodically in a prescribed cycle. The controller 11 of the storage-type electric water heater 7 internally has a storage and a clock, the power amount data sent as notification from the power meter 3 is stored as needed in the storage and is used for forecasting of the excess power amount.

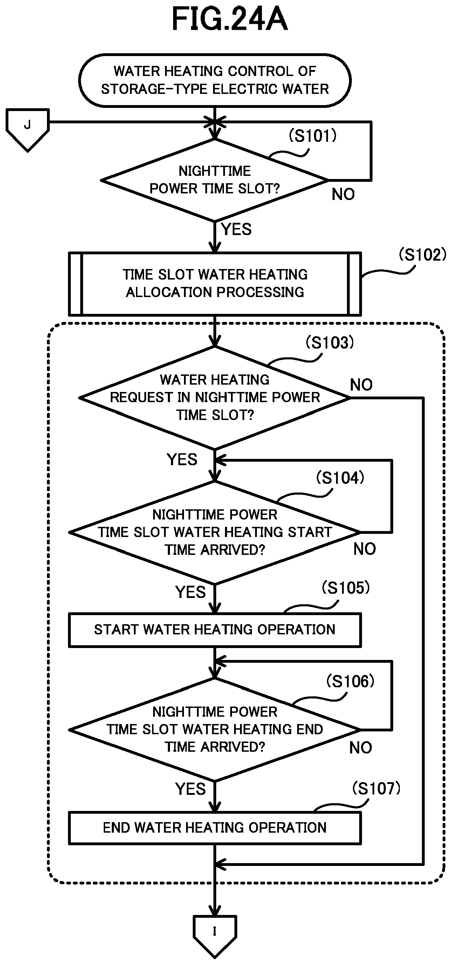

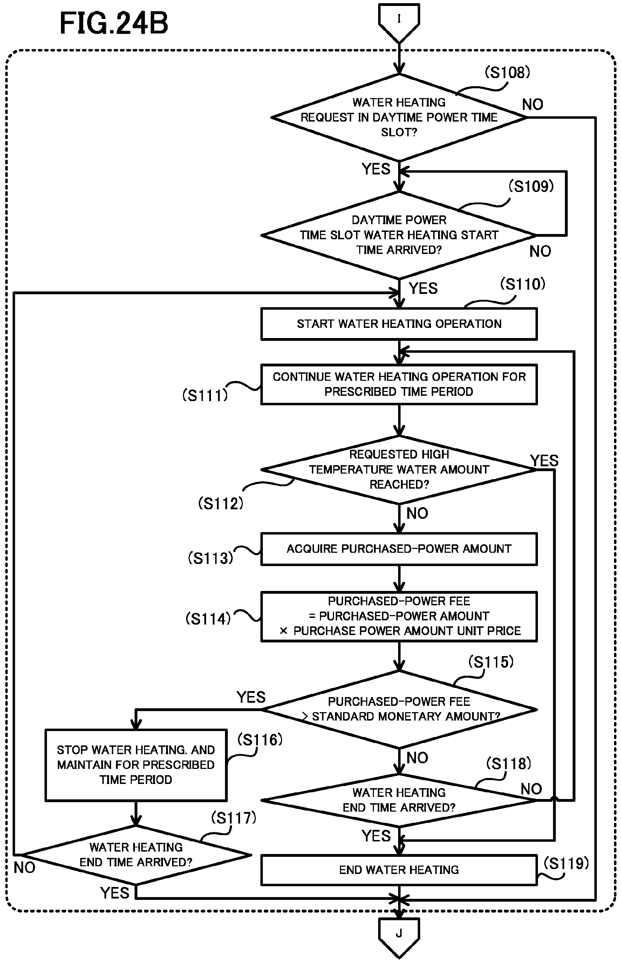

FIGS. 24A and 24B are flowcharts illustrating an example of operation of the controller of the storage-type electric water heater. Using the internal clock, the controller waits until arrival of the nighttime power time slot (step S101), and upon occurrence of the nighttime power time slot, performs the time slot water heating allocation processing (step S102). In the time slot water heating allocation processing, the controller calculates a high temperature water amount remaining in the hot water storage tank 9, a requested amount of high temperature water produced by water heating, and a required power amount (power amount required for water heating) needed for water heating on the basis of the feed water temperature and the like. Further, the controller uses the power amount data stored in the storage and estimates an excess power amount (the photovoltaic power generator power generated amount minus the used power amount of the other electrical load circuit 8) until a water heating target time. Then the controller allocates the water heating power amount of the nighttime power time slot on the basis of the power amount required for water heating and the excess power amount, and the controller uses the rated power of the storage-type electric water heater 7 and the like to determine the water heating operation time period occurring in the nighttime power time slot (nighttime water heating operation time period). Thereafter, the controller sets a nighttime water heating start time to be equal to a nighttime power time slot end time minus the nighttime water heating operation time period, and sets the end time of the nighttime power time slot to be the nighttime water heating end time. Further, the controller sets a water heating start time of the daytime power time slot so that the estimated excess power amount is sufficient to cover the water heating power.

Thereafter, the controller determines whether there exists a water heating request in the nighttime power time slot (step S103). If the excess power amount estimated in the time slot water heating allocation processing of step S102 greatly exceeds the power amount required for water heating, the controller does not set a water heating request of the nighttime power time slot. If there is a nighttime power time slot water heating request, the controller waits until arrival of the nighttime power time slot water heating start time (step S104), and causes the start of the water heating operation of the heat pump 10 (step S105). Thereafter, the controller waits until the water heating end time of the nighttime power time slot (step S106), and then causes stoppage of the water heating operation of the heat pump 10 (step S107).

Thereafter, the controller performs water heating control of the daytime power time slot. Firstly, the controller determines whether there exists a water heating request of the daytime power time slot (step S108). The controller may determine whether the high temperature water amount stored in the hot water storage tank 9 reaches the requested amount. If there exists a water heating request for the daytime power time slot, the controller waits until the daytime power time slot heating start time (step S109), causes the start of the water heating operation of the heat pump 10 (step S110), and causes the water heating operation to continue for a prescribed time period (step S111). Thereafter, the controller checks whether the requested high temperature water amount is secured in the hot water storage tank 9 (step S112), and if the requested high temperature water amount cannot be secured, acquires the purchased-power amount data from the power meter 3 (step S113). The controller multiplies the purchase power amount unit price by the purchased-power amount data to calculate the purchased-power fee (step S114). Thereafter, the controller compares the calculated purchased-power fee and the predetermined standard monetary amount (step S115). The standard monetary amount, for example, is taken to be the monetary amount required for causing the water heating operation of the storage-type electric water heater 7 at the rated power in the nighttime power time slot when the purchase power amount unit price is inexpensive. If the purchased-power fee is found in the comparison of step S115 to exceed the prescribed standard monetary amount, the controller causes the water heating operation of the heat pump 10 to stop, and maintains the stopped state for a prescribed time period (step S116). Thereafter, the controller determines whether there is arrival of the water heating end time (step S117), and if the arrival of the water heating end time is pending, returns to step S110 and restarts the water heating operation of the heat pump 10. If there is arrival of the end time in step S117, the controller ends the water heating control of the daytime power time slot.

If the purchased-power fee in step S115 is less than or equal to the standard monetary amount, the controller determines whether there is arrival of the water heating end time (step S118), and if the water heating end time is pending, returns to step Sill and continues the water heating operation of the heat pump 10 for a prescribed time period. If there is arrival of the end time in step S118, the controller causes stoppage of the water heating operation of the heat pump 10 (step S119), and ends the water heating control of the daytime power time slot.

For the storage-type electric water heater according to the present embodiment in the aforementioned manner, the water heating operation is temporarily stopped when the purchased-power fee exceeds the standard monetary amount in the daytime power time slot when the purchase power amount unit price is high, thereby enabling suppression of the increase in the purchased power outlay that occurs due to factors such as lowering of the photovoltaic power generator generated-power amount due to temporary cloudiness and the like.

### Embodiment 8

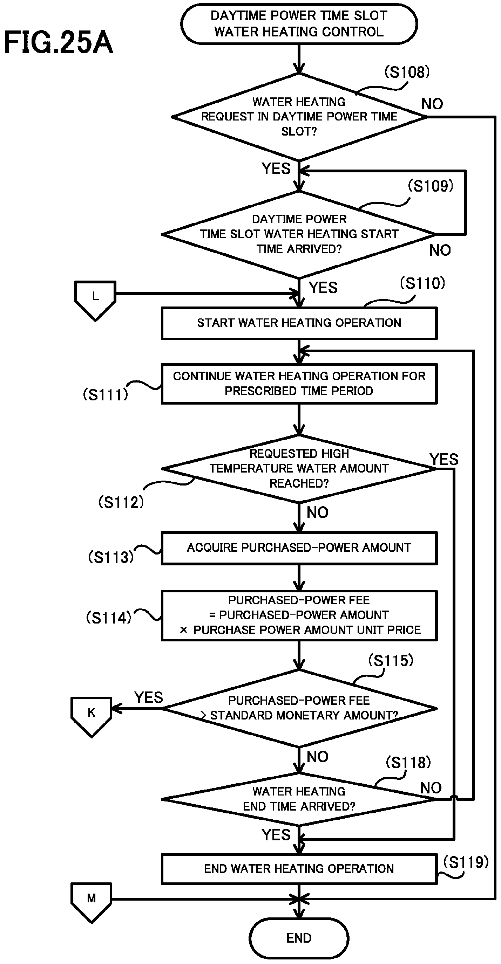

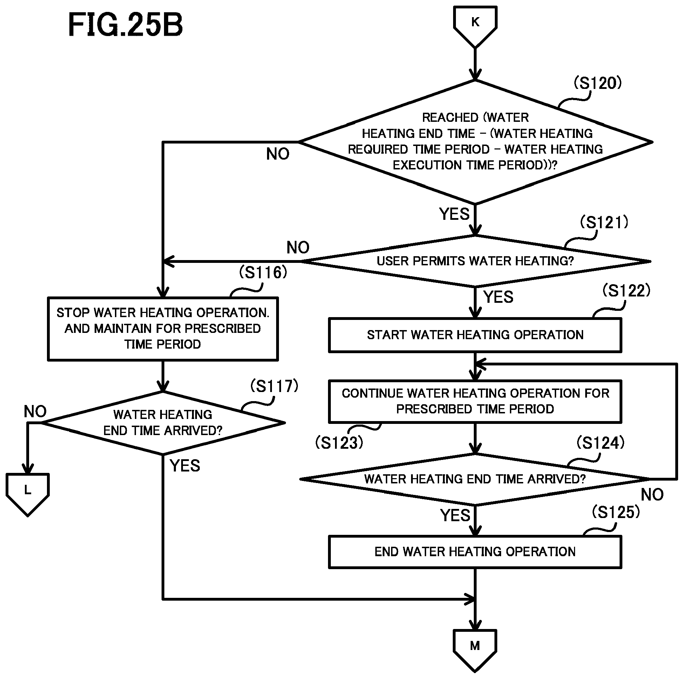

The storage-type electric water heater according to Embodiment 7 continues to execute the requested water heating of high temperature water regardless of the purchased-power fee in the nighttime power time slot, and when the purchased-power fee exceeds the standard monetary amount in the daytime power time slot, stops the water heating operation for the prescribed time period and suppresses the increase in the purchased power outlay. When the water heating operation is frequently limited by lowering of the power generation amount of the photovoltaic power generator due to temporary cloudiness and by increase in the purchased-power fee of the daytime power time slot due to unanticipated use of the electric equipment, heating of a sufficient high temperature water amount might not be possible. The storage-type electric water heater according to Embodiment 8 compares a time period remaining until the end time at which the ending of the water heating is requested (water heating end time) with the remaining water heating-required time period required until the end of water heating (equal to the water heating-required time period minus the water heating execution time period), and if a determination is made that the time period remaining until the water heating end time is less than the remaining water heating-required time period, the storage-type electric water heater continues the water heating operation regardless of the value of the purchased-power fee. FIGS. 25A and 25B are flowcharts illustrating operation during the daytime power time slot occurring in the controller of the storage-type electric water heater according to Embodiment 8. Processing in FIG. 25A and 25B that is the same or equivalent as that in FIGS. 24A and 24B is assigned the same reference sign as that in FIGS. 24A and 24B, which are the flowcharts of the controller of the storage-type electric water heater according to Embodiment 7. Further, the configuration of the storage-type electric water heater according to the present embodiment and the peripheral equipment thereof is similar to the configuration of FIG. 23 for Embodiment 7. Parts that differ from Embodiment 7 are described hereinafter.

In FIGS. 25A and 25B, the controller determines whether the purchased-power fee during the water heating exceeds the standard monetary amount (step S115), and if the purchased-power fee exceeds the standard monetary amount, the controller performs a comparison between the time period remaining until the end of water heating and the required remaining water heating-required time period until the end of water heating (step S120). Specifically, the controller compares the present time to a time calculated by subtracting from the water heating end time the "water heating-required time period minus the water heating execution time period". If the determination is that the time period remaining until the water heating end time is less than the remaining water heating-required time period, the controller determines whether there is user permission to execute the water heating operation regardless of the monetary amount of the purchased-power fee (step S121). If there is permission of the user for such water heating, the controller causes the heat pump 10 to start the water heating operation (step S122), causes continuation of the water heating operation until the water heating end time regardless of the purchased-power fee (step S123 and step S124), causes stoppage of the water heating operation of the heat pump 10 at the water heating end time (step S125), and ends the water heating control of the daytime power time slot. When the time period remaining until the end of water heating in step S120 is longer than the water heating-required time period, or when there is no user permission in step S121, the controller goes to step S116, causes stoppage of the heat pump 10, and suppresses the increase in the purchased power outlay.

For the storage-type electric water heater according to the present embodiment in the aforementioned manner, due to the temporary stoppage of the water heating operation when the purchased-power fee exceeds the standard monetary amount in the daytime power time slot in which the purchase power amount unit price is high, the increase in the purchased power outlay due to factors such as lowering of the photovoltaic power generator generated-power amount due to temporary cloudiness can be suppressed, and when the time period remaining until the water heating end time is short, the water heating operation can continue regardless of the purchased-power fee, and thus the required high temperature water amount can be reliably secured.

### Embodiment 9

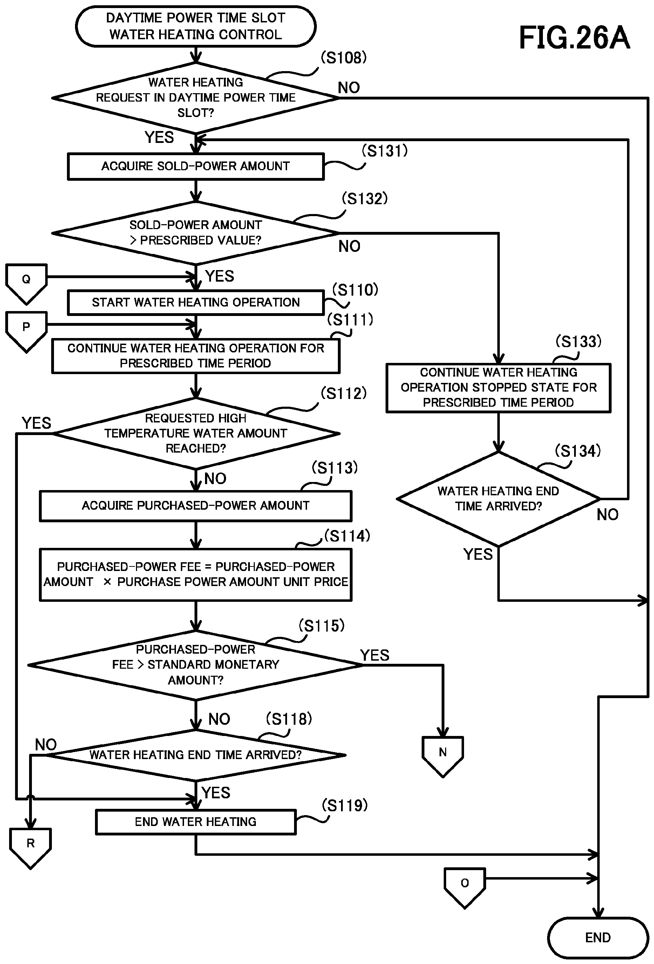

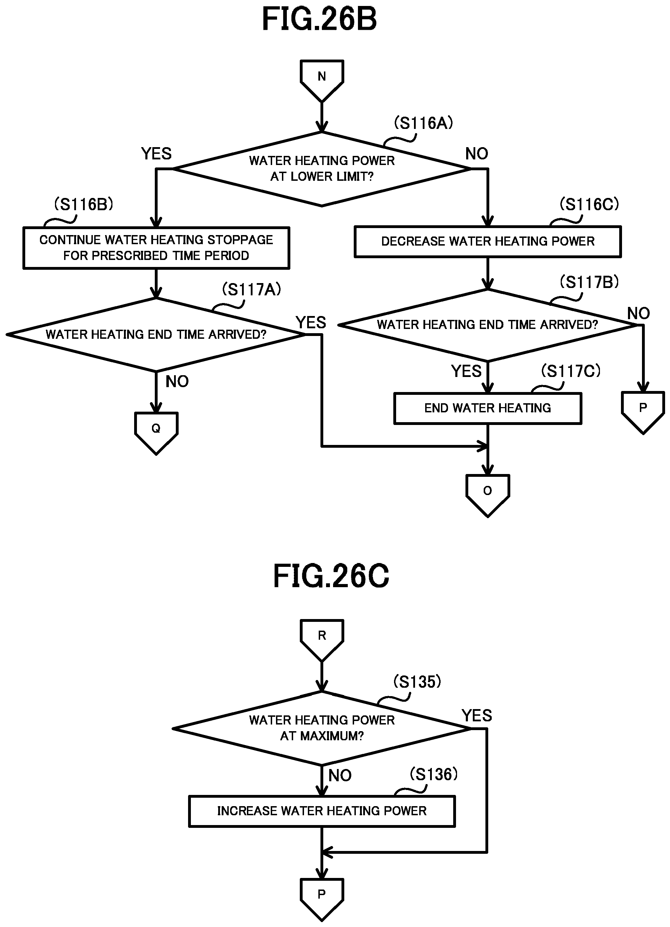

Although the storage-type electric water heater according to Embodiment 7 and Embodiment 8 performs control of whether or not the heat pump 10 performs the water heating operation, the storage-type electric water heater according to Embodiment 9 changes the drive frequency of the heat pump 10 to perform control that changes the power used in the water heating operation, and for example, can cause operation at the power illustrated in FIG. 11. FIGS. 26A to 26C are flowcharts illustrating operation of the daytime power time slot occurring in the controller of the storage-type electric water heater according to the present embodiment. Processing that is the same or equivalent to the processing in FIGS. 24A and 24B, which are the flowcharts of the controller of the storage-type electric water heater according to Embodiment 7, is assigned the same reference symbol. Further, the configuration of the storage-type electric water heater according to the present embodiment and the peripheral equipment thereof is similar to the configuration of FIG. 23 for Embodiment 7. The water heating control of the daytime power time slot is described hereinafter with reference to FIGS. 26A to 26C.

In the flowchart in FIG. 26A, firstly the controller determines whether there is a water heating request for the daytime power time slot (step S108). If there is a water heating request for the daytime power time slot, the controller acquires the sold-power amount data from the power meter 3 (step S131), and determines whether the sold-power amount exceeds a predetermined value (step S132). If the result of the determination is that the sold-power amount does not exceed the prescribed value, the water heating stopped state continues for a prescribed time period (step S133), and the controller determines whether the water heating end time is reached (step S134). If the water heating end time is reached, the controller ends the water heating control of the daytime power time slot. If the water heating end time is pending, the controller returns to step S131.

If the sold-power amount in step S132 exceeds the prescribed value, the controller runs the heat pump 10 to start the water heating operation (step S110), and causes the water heating operation to continue for a prescribed time period (step S111). Thereafter, the controller determines whether the requested high temperature water amount is secured in the hot water storage tank 9 (step S112). If the requested high temperature water amount cannot be secured, the controller acquires from the power meter 3 the purchased-power amount data (step S113), and calculates the purchased-power fee by multiplying the acquired purchased-power amount data by the purchase power amount unit price (step S114). Thereafter, the controller compares the calculated purchased-power fee with the prescribed standard monetary amount (step S115). If the purchased-power fee exceeds the prescribed standard monetary amount, the controller determines whether the power of the water heating operation of the heat pump 10 is at a lower limit (minimum power) (step S116A). If the result of the comparison is that the power of the water heating operation is at the lower limit, the controller causes stoppage of the water heating operation of the heat pump 10, and maintains this stopped state for a prescribed time period (step S116B). Thereafter, the controller determines whether there is arrival of the water heating end time (step S117A). If the water heating end time is pending, the controller returns to step S110 and restarts the water heating operation of the heat pump 10. If the end time is reached in step S117A, the controller stops the water heating control of the daytime power time slot. If the power of the water heating operation of the heat pump 10 in step S116A is not at the lower limit, the controller causes a decrease in the power of the water heating operation (step S116C), and determines whether there is arrival of the water heating end time (step S117B). If the water heating end time is pending, the controller returns to step S111, and continues the water heating operation state of the heat pump 10 for a prescribed time period. If the end time is reached in step s117B, the controller causes stoppage of the water heating operation of the heat pump 10 (step S117C), and ends the water heating control of the daytime power time slot.

If the purchased-power fee in step S115 is less than or equal to the standard monetary amount, the controller determines whether there is arrival of the water heating end time (step S118), and if the water heating end time is pending, the controller returns to step S111 and determines whether the power of the water heating operation of the heat pump 10 is at a maximum (rated) power (step S135). If the result of the determination is that the power of the water heating operation is at the maximum power, the controller continues the water heating operation without change. If the result of the determination is that the power of the water heating operation is not the maximum power, the controller causes the water heating power to increase (step S136), returns to step S111, and continues the water heating operation. If the end time is reached in step S118, the controller causes stoppage of the water heating operation of the heat pump 10 (step S119), and ends the water heating control of the daytime power time slot.

For the storage-type electric water heater according to the present embodiment in the aforementioned manner, in the daytime power time slot when the purchase power amount unit price is high, the water heating operation is temporarily suppressed when the purchased-power fee exceeds the standard monetary amount so as to suppress the increase in the purchased power outlay due to factors such as lowering of the photovoltaic power generator power generated amount due to temporary cloudiness, and there is reversion to the water heating operation when the prescribed time period is passed, thereby enabling the securing of the required high temperature water. Further, since the water heating operation can be performed at a power that is less than the rated power, the water heating operation can be continued while suppressing the generation of a large purchased-power fee, and the photovoltaic power generator generated power can be effectively used.

### Embodiment 10

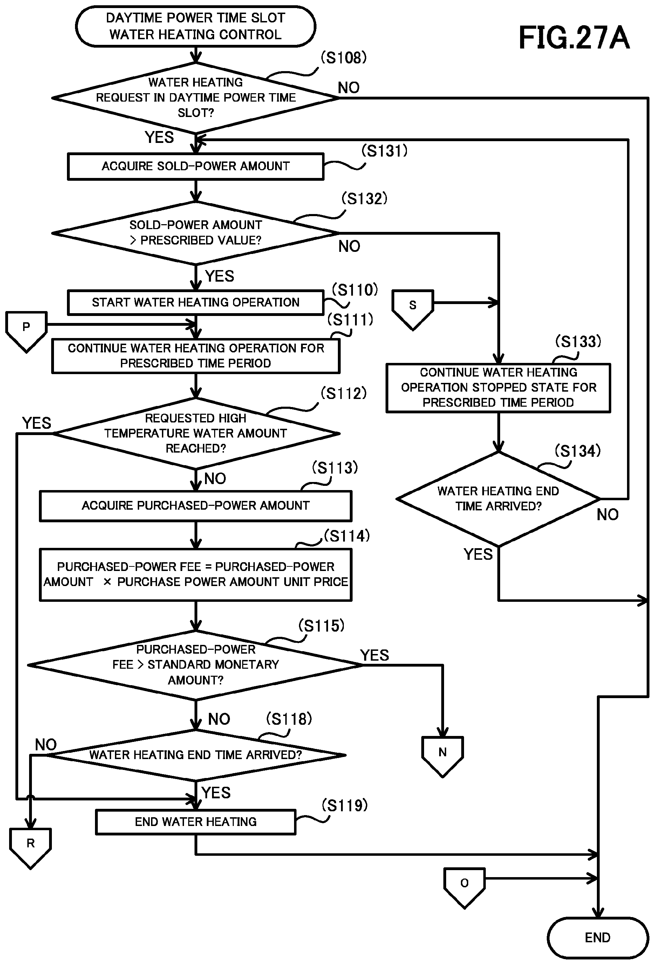

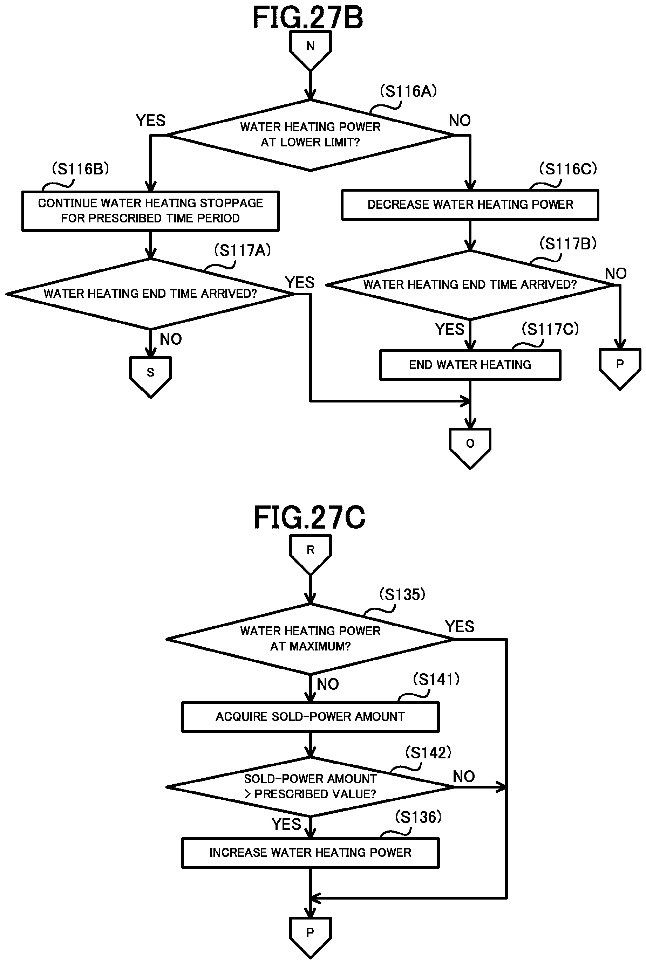

When the purchased-power fee exceeds the standard monetary amount in the daytime power time slot when the purchase power amount unit price is high, the storage-type electric water heater according to Embodiment 10 stops or suppresses the water heating operation of the heat pump 10 to suppress the increase in the purchased power outlay, and secures the required water heating high temperature water amount by cancelling the stopped state or suppressed state if the sold-power amount is less than or equal to a standard value. Further, the storage-type electric water heater according to the present embodiment also changes the drive frequency of the heat pump 10 to perform control by changing the power used in the water heating operation, for example, by causing operation at the power illustrated in FIG. 11. FIGS. 27A to 27C illustrate flowcharts of the water heating control of the daytime power time slot occurring in the controller of the storage-type electric water heater according to Embodiment 10. In the flowcharts, processing that is the same or corresponds to that of the flowcharts of FIGS. 26A to 26C for Embodiment 9 is assigned the same reference symbol, and description of such processing is omitted. Further, the configuration of the storage-type electric water heater according to the present embodiment and the peripheral equipment thereof is similar to the configuration of FIG. 23 for Embodiment 7. In the water heating control of the daytime power time slot, the resumption of processing after stopping or suppressing of the water heating operation due to the purchased-power fee exceeding the standard monetary amount is described hereinafter with reference to FIGS. 27A to 27C.

In FIG. 27A, when the purchased-power fee during the water heating operation is less than or equal to the standard monetary amount (step S115) and the water heating end time is pending (step S118), the controller determines whether the power of the water heating operation of the heat pump 10 is the maximum power (step S135). If the power of the water heating operation is not the maximum power, the controller acquires from the power meter 3 the sold-power amount data (step S141), and the controller determines whether the sold-power amount exceeds a prescribed value (for example, 600 W × a prescribed time period) (step S142). If the sold-power amount exceeds the prescribed value, the controller controls the heat pump 10 to cause an increase in the water heating power (step S136), returns to step S111, and continues the water heating operation. If the power of the water heating operation in step S135 is the maximum power, or if the sold-power amount in step S142 is less than or equal to the prescribed value, the controller maintains the water heating power amount of the heat pump 10, returns to step S111, and continues the water heating operation.

For the storage-type electric water heater according to the present embodiment in the aforementioned manner, when the purchased-power fee in the daytime power time slot when the purchase power amount unit price is high exceeds the standard monetary amount, the water heating operation is temporarily suppressed, so that the increase in the purchased power outlay due to factors such as the decrease in the photovoltaic power generator generated power amount due to temporary cloudiness is suppressed, and also the water heating operation is resumed when the sold-power amount exceeds the prescribed value, thereby enabling suppressing of the occurrence of the high sold-power electric utility rate even when the water heating operation is resumed.

### Embodiment 11

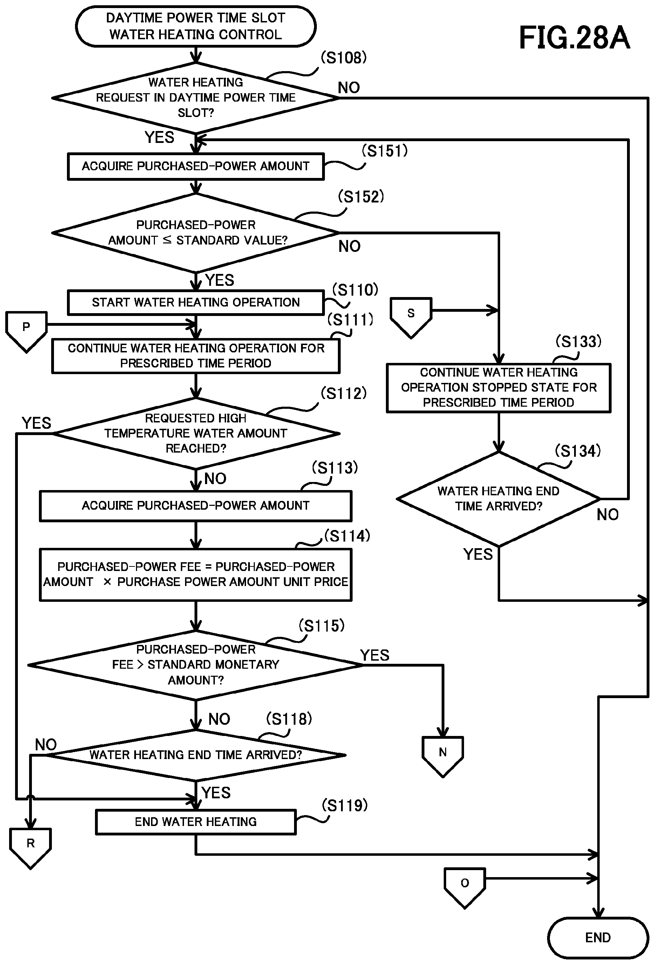

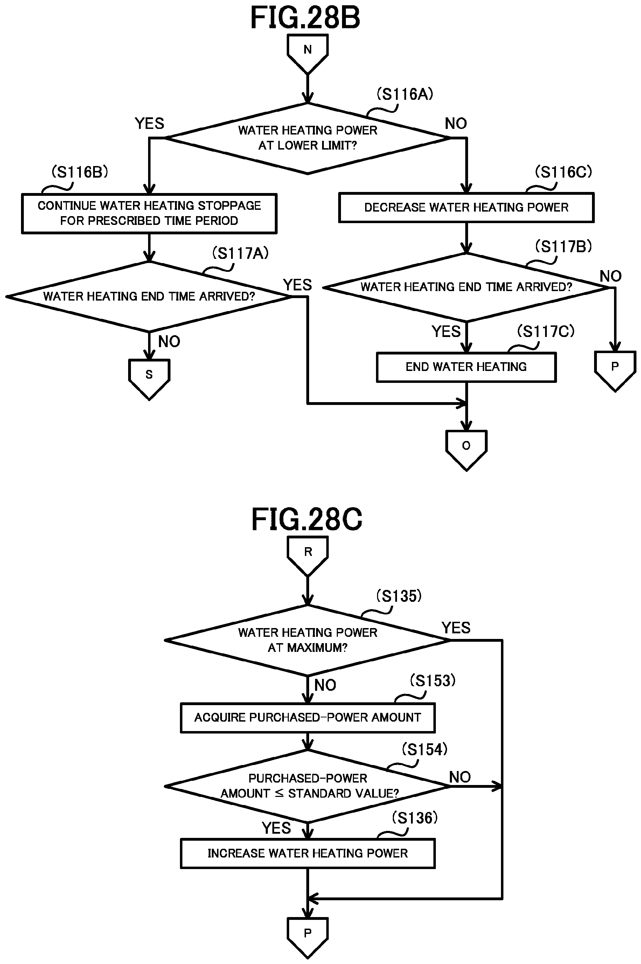

For the storage-type electric water heater according to Embodiment 11, when the purchased power fee exceeds the standard monetary amount in the daytime power time slot when the purchase power amount unit price is high, the increase in the purchased power outlay is suppressed by stopping or suppressing the water heating operation of the heat pump 10, and also the stopped state or the suppressed state is cancelled when the purchased-power amount is less than or equal to the standard value, so that the required amount of the high temperature water is secured. FIGS. 28A to 28C illustrate flowcharts of the water heating control by the controller of the storage-type electric water heater according to Embodiment 1 occurring in the daytime power time slot. In the flowcharts, processing that is the same or corresponds to that of the flowcharts of FIGS. 27A to 27C for Embodiment 10 is assigned the same reference symbol, and description of such processing is omitted. Further, the configuration of the storage-type electric water heater according to the present embodiment and the peripheral equipment thereof is similar to the configuration of FIG. 23 for Embodiment 7. In the water heating control of the daytime power time slot, the determination processing of the water heating operation start and the resumption of processing after the stoppage or the suppressing of the water heating operation due to the purchased-power fee exceeding the standard monetary amount, are described below with reference to FIGS. 28A to 28C.

For the determination of the water heating operation start in the daytime power time slot, in FIG. 28A, firstly the controller determines whether there is a water heating request in the daytime power time slot (step S108), and if there is a water heating request, the controller acquires from the power meter 3 the purchased-power amount data (step S151), and determines whether the purchased-power amount data is less than or equal to the standard value (for example, 0 Wh) (step S152). If the result of the determination is that the purchased-power amount is less than or equal to the standard value, there is a possibility of the occurrence of excess power due to the generated power of the photovoltaic power generator 1, and thus the controller controls the heat pump 10 to start the water heating operation (step S110). In the resumption of processing after the stoppage or the suppressing of the water heating operation due to the purchased-power fee exceeding the standard monetary amount, if the purchased-power fee during the water heating operation is less than or equal to the standard monetary amount (step S115) and the water heating end time is pending (step S118), the controller determines whether the power of the water heating operation of the heat pump 10 is the maximum power (step S135). If the power of the water heating operation is not the maximum power, the controller acquires from the power meter 3 the purchased-power amount data (step S153), and determines whether the purchased-power amount is less than or equal to a standard value (for example, 0 Wh) (step S142). If the purchased-power amount is less than or equal to the standard value, due to a possibility of the occurrence of excess power, the controller controls the heat pump 10 to cause the water heating power to increase (step S136), returns to step S111, and continues the water heating operation. If the power of the water heating operation in step S135 is the maximum power, or if the purchased-power amount in step S142 exceeds the standard value, the controller maintains the water heating power amount of the heat pump 10, returns to step S111, and continues the water heating operation.

For the storage-type electric water heater according to the present embodiment in the aforementioned manner, when the purchased-power fee exceeds the standard monetary amount in the daytime power time slot when the purchase power amount unit price is high, the water heating operation is temporarily suppressed so as to suppress the increase in the purchased power outlay occurring due to factors such as decline of the photovoltaic power generator generated-power amount due to temporary cloudiness, and also the water heating operation is resumed if the purchased-power amount is less than or equal to the prescribed value, thereby enabling effective use of the excess power generated by the photovoltaic power generator.

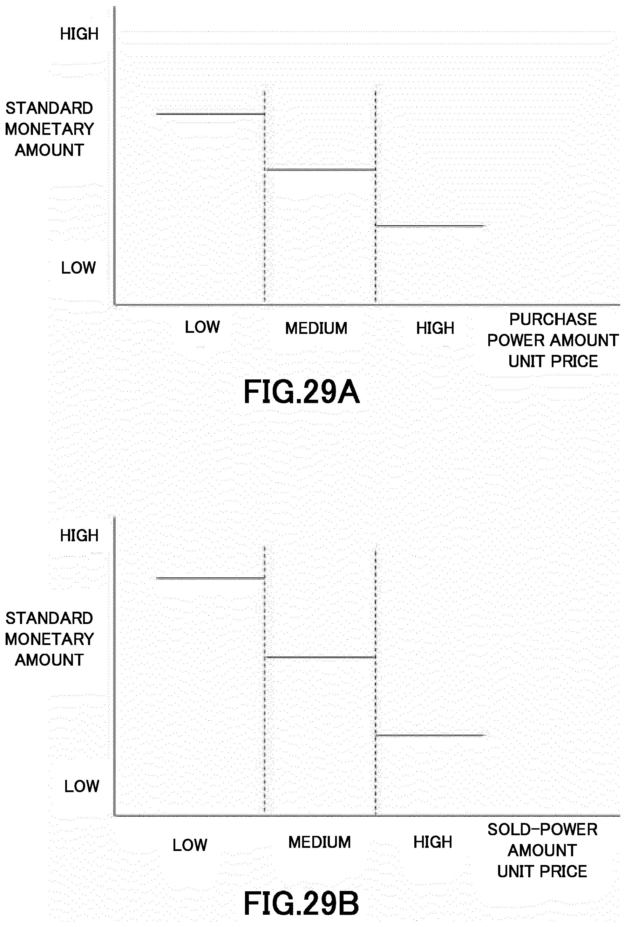

Further, in Embodiment 1 to Embodiment 11, the standard monetary amount that is compared to the purchased-power fee may be set low when the purchase power amount unit price is high as illustrated in FIG. 29A, for example, and may be set high when the purchase power amount unit price is low. By setting the standard monetary amount in this manner, when the purchase power amount unit price is low, the suppressing of the water heating operation of the storage-type electric water heater tends not to occur, the water heating operation tends to continue, and thus the water heating can be performed at a relatively low electricity unit price. However, when the purchase power amount unit price is high, the standard monetary amount is lowered, and thus the water heating operation of the storage-type electric water heater is much more readily limited, and the suppression of the purchased-power fee is further enabled. Further, in the case of a high purchase power amount unit price accompanied by an increase in the purchased-power fee greater than such increase in the purchased-power amount, in the same manner, the risk of a sudden increase in the purchased-power fee can be decreased due to the early performance of limiting of the water heating.

Further, the standard monetary amount that is compared to the purchased-power fee may be set low, for example, when the sold-power amount unit prices is high as illustrated in FIG. 29B, and may be set high when the sold-power amount unit price is low. If the standard monetary amount is set in this manner, when the sold-power amount unit price is low, the water heating operation of the storage-type electric water heater becomes difficult to suppress, and the water heating operation tends to be executed continuously. This enables effective use of the excess power generated by the photovoltaic power generator.

### Reference Signs List

- 1: photovoltaic power generator
- 2: electrical load circuit
- 3: power meter
- 4: HEMS controller
- 5: PV panel
- 6: power conditioner
- 7: storage-type electric water heater
- 9: hot water storage tank
- 10: heat pump
- 11: controller
- 12: cloud server

## Claims

1. A water heater control system comprising:
a commercial power supply;
a photovoltaic power generator (1) interconnected with the commercial power supply;
an electrical load circuit (2) including a storage-type electric water heater (7) configured to use power from the commercial power supply and power generated by the photovoltaic power generator (1) to perform a water heating operation of heating low temperature water to high temperature water and storing the high temperature water; and
a control device (4) configured to control the water heating operation of the storage-type electric water heater (7) based on purchased power fee data for purchased power supplied to the electrical load circuit (2) from the commercial power supply, wherein when controlling the water heating operation of the storage-type electric water heater (7), there is a water heating-limiting operation mode and a water-heating continuing operation mode, the water heating-limiting operation mode being a mode in which the control device (4) calculates or acquires, at prescribed time intervals, said purchased-power fee data and when the purchased-power fee data exceeds a standard monetary amount, suppresses or stops the water heating operation of the storage-type electric water heater (7) to limit the water heating operation, the water-heating continuing operation mode being a mode in which the control device (4) continues the water heating operation of the storage-type electric water heater (7) regardless of whether the purchased-power fee data exceeds the standard monetary amount, the control device (4) switching between the water heating-limiting operation mode and the water-heating continuing operation mode based on a time slot.

2. The water heater control system according to claim 1, **characterized in that**, after limiting the water heating operation of the storage-type electric water heater (7) due to the purchased-power fee data for the purchased power exceeding the standard monetary amount, the control device (4), upon passage of a prescribed time period, cancels a limitation of the water heating operation.

3. The water heater control system according to claim 1 or 2, **characterized in that** the control device (4) comprises power amount data-acquiring means for acquiring sold-power amount data for power flowing from the photovoltaic power generator (1) back to the commercial power supply, and when the sold-power amount data acquired by the power amount data-acquiring means is higher than a prescribed value, the control device (4) (i) starts or continues the water heating operation of the storage-type electric water heater (7), or (ii) increases or maintains water heating power of the storage-type electric water heater (7).

4. The water heater control system according to any one of claims 1 to 3, **characterized in that** the control device (4) comprises power amount data-acquiring means for acquiring purchased-power amount data for power supplied from the commercial power supply to the electrical load circuit (2), and when the purchased-power amount data acquired by the power amount data-acquiring means is lower than a prescribed value, the control device (4) (i) starts or continues the water heating operation of the storage-type electric water heater (7), or (ii) increases or maintains water heating power of the storage-type electric water heater (7).

## Patentansprüche

1. Steuerungssystem für einen Wassererhitzer, aufweisend:
eine Netzstromversorgung;
einen Generator (1) für Photovoltaikleistung; der mit der Netzstromversorgung verbunden ist;
eine Schaltung (2) einer elektrischen Last, die einen Wassererhitzer (7) vom Speichertyp enthält, der dafür konfiguriert ist, Leistung von der Netzstromversorgung und durch den Generator (1) für Photovoltaikleistung erzeugte Leistung zu nutzen, um einen Wassererhitzungsbetrieb, um Wasser mit niedriger Temperatur auf Wasser mit hoher Temperatur zu erhitzen und das Wasser mit hoher Temperatur zu speichern, durchzuführen; und
eine Steuerungsvorrichtung (4), die dafür konfiguriert ist, den Wassererhitzungsbetrieb des elektrischen Wassererhitzers (7) vom Speichertyp basierend auf Daten über Gebühren gekaufter Leistung für von der Netzstromversorgung der Schaltung (2) einer elektrischen Last bereitgestellte gekaufte Leistung zu steuern, wobei, wenn der Wassererhitzungsbetrieb des elektrischen Wassererhitzers (7) vom Speichertyp gesteuert wird, es einen eine Wassererhitzung beschränkenden Betriebsmodus und einen eine Wassererhitzung fortsetzenden Betriebsmodus gibt,
wobei der eine Wassererhitzung beschränkende Betriebsmodus ein Modus ist, in welchem die Steuerungsvorrichtung (4) in vorbestimmten Intervallen die Daten über Gebühren gekaufter Leistung berechnet oder erfasst, und, wenn die Daten über Gebühren gekaufter Leistung einen Standardgeldbetrag übersteigen, den Wassererhitzungsbetrieb des elektrischen Wassererhitzers (7) vom Speichertyp unterbindet oder stoppt, um den Wassererhitzungsbetrieb zu beschränken,
wobei der eine Wassererhitzung fortsetzende Betriebsmodus ein Modus ist, in welchem die Steuerungsvorrichtung (4) den Wassererhitzungs betrieb des elektrischen Wassererhitzers (7) vom Speichertyp ungeachtet davon fortsetzt, ob die Daten über Gebühren gekaufter Leistung den Standardgeldbetrag übersteigen,
wobei die Steuerungsvorrichtung (4) basierend auf einem Zeitschlitz zwischen dem eine Wassererhitzung beschränkenden Modus und dem eine Wassererhitzung fortsetzenden Modus umschaltet.

2. Steuerungssystem für einen Wassererhitzer nach Anspruch 1, **dadurch gekennzeichnet, dass** nach einer Beschränkung des Wassererhitzungsbetriebs des elektrischen Wassererhitzers (7) vom Speichertyp aufgrund des Umstands, dass die Daten über Gebühren gekaufter Leistung für die gekaufte Leistung den Standardgeldbetrag übersteigen, die Steuerungsvorrichtung (4) bei Ablauf eines vorgeschriebenen Zeitraums eine Beschränkung des Wassererhitzungsbetriebs aufhebt.

3. Steuerungssystem für einen Wassererhitzer nach Anspruch 1 oder 2, **dadurch gekennzeichnet, dass** die Steuerungsvorrichtung (4) ein Leistungsmengendaten erfassendes Mittel aufweist, um Daten über eine verkaufte Leistungsmenge für vom Generator (1) für Photovoltaikleistung zurück in die Netzstromversorgung fließende Leistung zu erfassen, und, wenn die Daten über eine verkaufte Leistungsmenge, die durch das Leistungsmengendaten erfassende Mittel erfasst wurden, höher als ein vorgeschriebener Wert sind, die Steuerungsvorrichtung (4) (i) den Wassererhitzungsbetrieb des elektrischen Wassererhitzers (7) vom Speichertyp startet oder fortsetzt oder (ii) eine Wasserheizleistung des elektrischen Wassererhitzers (7) vom Speichertyp erhöht oder beibehält.

4. Steuerungssystem nach einem der Ansprüche 1 bis 3, **dadurch gekennzeichnet, dass** die Steuerungsvorrichtung (4) ein Leistungsmengendaten erfassendes Mittel aufweist, um Daten über eine gekaufte Leistungsmenge für von der Netzstromversorgung der Schaltung (2) einer elektrischen Last bereitgestellte Leistung zu erfassen, und, wenn die durch das Leistungsmengendaten erfassende Mittel erfassten Daten über eine gekaufte Leistungsmenge geringer als ein vorgeschriebener Wert sind, die Steuerungsvorrichtung (4) (i) den Wassererhitzungsbetrieb des elektrischen Wassererhitzers (7) vom Speichertyp startet oder fortsetzt oder (ii) eine Wasserheizleistung des elektrischen Wassererhitzers (7) vom Speichertyp erhöht oder beibehält.

## Revendications

1. Système de commande de chauffe-eau comprenant :
une alimentation commerciale ;
un générateur photovoltaïque (1) interconnecté avec l'alimentation commerciale ;
un circuit de charge électrique (2) comportant un chauffe-eau électrique de type à stockage (7) configuré pour utiliser une énergie provenant de l'alimentation commerciale et une énergie générée par le générateur photovoltaïque (1) pour effectuer une opération de chauffage d'eau consistant à chauffer de l'eau à basse température en eau à haute température et à stocker l'eau à haute température ; et
un dispositif de commande (4) configuré pour commander l'opération de chauffage d'eau du chauffe-eau électrique de type à stockage (7) sur la base des données tarifaires d'énergie achetée pour une énergie achetée fournie au circuit de charge électrique (2) depuis l'alimentation commerciale, dans lequel
lors de la commande de l'opération de chauffage d'eau du chauffe-eau électrique de type à stockage (7), il existe un mode opératoire de limitation de chauffage d'eau et un mode opératoire de continuité de chauffage d'eau, le mode opératoire de limitation de chauffage d'eau étant un mode dans lequel le dispositif de commande (4) calcule ou acquiert, à des intervalles de temps prescrits, lesdites données tarifaires d'énergie achetée, et
lorsque les données tarifaires d'énergie achetée dépassent un montant monétaire standard, supprime ou interrompt l'opération de chauffage d'eau du chauffe-eau électrique de type à stockage (7) pour limiter l'opération de chauffage d'eau, le mode opératoire de continuité de chauffage d'eau étant un mode dans lequel le dispositif de commande (4) continue l'opération de chauffage d'eau du chauffe-eau électrique de type à stockage (7) indépendamment du fait que les données tarifaires d'énergie achetée dépassent ou non le montant monétaire standard, le dispositif de commande (4) commutant entre le mode opératoire de limitation de chauffage d'eau et le mode opératoire de continuité de chauffage d'eau sur la base d'un créneau horaire.

2. Système de commande de chauffe-eau selon la revendication 1, **caractérisé en ce que**, après une limitation de l'opération de chauffage d'eau du chauffe-eau électrique de type à stockage (7) en raison du fait que les données tarifaires d'énergie achetée pour l'énergie achetée dépassent le montant monétaire standard, le dispositif de commande (4), lors du passage d'une période de temps prescrite, annule une limitation de l'opération de chauffage d'eau.

3. Système de commande de chauffe-eau selon la revendication 1 ou 2, **caractérisé en ce que** le dispositif de commande (4) comprend des moyens d'acquisition de données de montant d'énergie pour acquérir des données de montant d'énergie vendue pour une énergie retournant du générateur photovoltaïque (1) à l'alimentation commerciale, et lorsque les données de montant d'énergie vendue acquises par les moyens d'acquisition de données de montant d'énergie sont supérieures à une valeur prescrite, le dispositif de commande (4) (i) démarre ou continue l'opération de chauffage d'eau du chauffe-eau électrique de type à stockage (7), ou (ii) augmente ou maintient une énergie de chauffage d'eau du chauffe-eau électrique de type à stockage (7).

4. Système de commande de chauffe-eau selon l'une quelconque des revendications 1 à 3, **caractérisé en ce que** le dispositif de commande (4) comprend des moyens d'acquisition de données de montant d'énergie pour acquérir des données de montant d'énergie achetée pour une énergie fournie de l'alimentation commerciale au circuit de charge électrique (2), et lorsque les données de montant d'énergie achetée acquises par les moyens d'acquisition de données de montant d'énergie sont inférieures à une valeur prescrite, le dispositif de commande (4) (i) démarre ou continue l'opération de chauffage d'eau du chauffe-eau électrique de type à stockage (7), ou (ii) augmente ou maintient une énergie de chauffage d'eau du chauffe-eau électrique de type à stockage (7).
